# EUROPÄISCHE PATENTANMELDUNG

(11) **EP 4 759 890 A1**
(43) Veröffentlichungstag der Anmeldung: **17.06.2026**
(21) Anmeldenummer: 25220282.5
(22) Anmeldetag: 03.12.2025
(51) Int. Cl.: C09J 5/02, C09J 7/10, C09J 9/02

(54) **ELEKTRISCH ABLÖSBARES KLEBEBAND-SYSTEM UMFASSEND EINEN FILM D AUS EINER HITZEAKTIVIERBAREN REAKTIVEN KLEBEMASSE UND EINE PRIMERZUSAMMENSETZUNG**

(30) Priorität: 10.12.2024 DE 102024136914
(71) Anmelder: TESA SE, 22848 Norderstedt (DE)
(72) Erfinder: DOCKWEILER, Dennis, 22848 Norderstedt (DE); FISCHER, Alexander, 22848 Norderstedt (DE)
(74) Vertreter: tesa SE

(57) **Zusammenfassung**

Die Erfindung betrifft ein Klebeband-System umfassend einen Film D aus einer hitzeaktivierbaren reaktiven Klebemasse und eine Primerzusammensetzung, ein Verfahren zur Herstellung eines verklebten Verbundes unter Verwendung des Klebeband-Systems, den mit dem Verfahren hergestellten verklebten Verbund, ein Verfahren zum elektrischen Lösen des verklebten Verbundes und die Verwendung des verklebten Verbundes.

Das Klebeband-System umfasst
(i) einen Film D aus einer reaktiven hitzeaktivierbaren Klebemasse, wobei die reaktive hitzeaktivierbare Klebemasse wenigstens einen Elektrolyten enthält; und
(ii) eine Primerzusammensetzung, die zur Ausbildung einer separaten Schicht vorgesehen ist und wenigstens folgende Bestandteile enthält:
(a) wenigstens ein thermoplastisches Polyurethan; und
(b) wenigstens ein Organosilan.

## Beschreibung

Die Erfindung betrifft ein Klebeband-System umfassend einen Film D aus einer hitzeaktivierbaren reaktiven Klebemasse und eine Primerzusammensetzung, ein Verfahren zur Herstellung eines verklebten Verbundes unter Verwendung des Klebeband-Systems, den mit dem Verfahren hergestellten verklebten Verbund, ein Verfahren zum elektrischen Lösen des verklebten Verbundes und die Verwendung des verklebten Verbundes.

Zur Verklebung von Metallteilen auf Kunststoffen werden üblicherweise doppelseitige Haftklebebänder eingesetzt. Die hierfür erforderlichen Klebkräfte genügen einer Fixierung und Befestigung der Metallbauteile auf den Kunststoffen. Als Metalle werden bevorzugt Stahl, Edelstahl sowie Aluminium eingesetzt. Als Kunststoffe werden z.B. PVC, ABS, PC oder Blends basierend auf diesen Kunststoffen eingesetzt. Ferner werden elektrisch nichtleitfähige Materialien durch geeignete elektrisch leitfähige Coatings oder ähnliches elektrisch leitfähig ausgerüstet und ebenfalls verklebt.

Für portable Konsumgüterelektronikartikel steigen jedoch stetig die Anforderungen. Diese Artikel werden immer kleiner, so dass damit auch die Verklebungsflächen geringer werden. Diese Voraussetzungen sind besonders problematisch für Metallverklebungen auf Kunststoffen. Dies kann in besonders effizienter Weise durch den Einsatz hitzeaktivierbarer Filme geschehen, die eine besonders hohe Verklebungsfestigkeit nach der Aktivierung ausbilden können.

Die DE 10 2021 200 580 A1 offenbart beispielsweise einen Klebefilm, der mittels Wärmezufuhr gehärtet wird, wobei der Klebefilm auf einer Zubereitung in organischem Lösemittel basiert, die ein thermoplastisches Polymer, welches über funktionelle Gruppen mit Isocyanat reagieren kann, und eine entsprechende Isocyanat-haltige Vernetzer-Komponente enthält. Allerdings sind nicht alle zu verklebenden Substrate für Aktivierungstemperaturen von 80 °C oder mehr geeignet.

Neuerdings besteht zudem ein erhöhtes Interesse an "Debonding-on-Demand"-Funktionalitäten, welche aufgrund von Umweltgesetzen bzw. des Bewusstseins der Endkunden für Nachhaltigkeit und einem steigenden Kostendruck bei der Herstellung zustande kommen. Die Anwendungsszenarien für Debonding-Prozesse werden in Nacharbeiten, Reparieren, Recycling und Verarbeitungshilfen klassifiziert.

Die Debonding-Technologien zielen darauf, ein kohäsives Spalten der Klebstoffschicht oder ein adhäsives Ablösen der Klebstoffschicht vom Substrat zu erzielen. Während ersteres in jedem Fall eine Reinigung wenigstens eines Substrats vor einer Wiederverklebung erfordert, bleibt bei letzterem ein Substrat rückstandsfrei. Ein adhäsives Spalten ist somit bevorzugt, um auf einen zusätzlichen Reinigungsschritt, der ggf. die Substratbeschaffenheit beeinträchtigen könnte, verzichten zu können. Adhäsiv lösende Technologien, die die geforderte hohe und dauerhaft zuverlässige Verklebungsfestigkeit garantieren, sind jedoch in der Regel schwieriger zu verwirklichen oder dauern in der Anwendung sehr lange, wie z.B. das Ablösen mittels eines unterwandernden Lösemittels. So sind derzeit insbesondere in der Nacharbeit oder Reparatur von elektronischen Geräten, wie z.B. Smartphones und Tablet-Computern, vorwiegend kohäsiv spaltende Klebverbindungen im Einsatz, vielfach ausgeführt als Haftklebebänder, die über eine Temperaturerhöhung so weit in ihrer Kohäsion gemindert werden, dass eine manuelle, kohäsive Trennung der Verklebung erfolgen kann. Umfangreiche Nacharbeiten zur Vorbereitung der mit Klebstoffresten verunreinigten Substratoberfläche für eine Wiederverklebung sind die Folge.

Neben wärmevermittelten Trennverfahren werden elektrische Trennverfahren diskutiert. So offenbart beispielsweise die EP 3 031 875 B1 die Herabsetzung der Klebkraft einer Acrylat-Klebemasse enthaltend ein Tensid durch das Anlegen einer Spannung. Hierin wird beispielsweise eine Reduktion der Klebkraft um 29 bis 98 % erzielt.

Hitzeaktivierte Klebeverbindungen weisen in der Regel jedoch sehr hohe Verklebungsfestigkeiten auf. Diese Klebebandlösungen sind normalerweise nicht oder nicht ohne Beschädigung der damit verklebten Substrate und nur unter sehr hohem Kraftaufwand wieder ablösbar.

Der vorliegenden Erfindung liegt daher die Aufgabe zugrunde, ein Klebeband-System zur Herstellung eines hitzeaktiviert verklebten und bei Bedarf wieder lösbaren Verbunds bereitzustellen, wobei die Entfernung der Verklebung mittels eines schonenden Trennverfahrens möglichst rückstandsfrei und unter geringem Kraftaufwand ermöglicht werden soll. Gleichzeitig soll auch das Verfahren zur Herstellung des verklebten Verbundes bereits Substrat-schonend durchführbar sein. Zudem soll der verklebte Verbund eine verbesserte Verklebungsfestigkeit und eine verbesserte Schockbeständigkeit aufweisen.

Die Aufgabe wird durch das erfindungsgemäße Klebeband-System sowie das erfindungsgemäße Verfahren zur Herstellung eines verklebten Verbundes und somit auch durch den erfindungsgemäßen mittels des Verfahrens hergestellten verklebten Verbund gelöst. Ferner wird die Aufgabe durch das erfindungsgemäße Verfahren zum elektrischen Lösen des verklebten Verbundes und die Verwendung des verklebten Verbundes gelöst.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Damit sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Merkmale bevorzugter verklebter Verbunde sowie Verwendungen und Verfahren zum Lösen ergeben sich insbesondere aus den Merkmalen bevorzugter Klebeband-Systeme und/oder Verfahren zur Herstellung des verklebten Verbundes.

Das erfindungsgemäße Klebeband-System umfasst
(i) einen Film D aus einer reaktiven hitzeaktivierbaren Klebemasse, wobei die reaktive hitzeaktivierbare Klebemasse wenigstens einen Elektrolyten enthält; und
(ii) eine Primerzusammensetzung, die zur Ausbildung einer separaten Schicht vorgesehen ist und wenigstens folgende Bestandteile enthält:
   (a) wenigstens ein thermoplastisches Polyurethan; und
   (b) wenigstens ein Organosilan.

Das erfindungsgemäße Verfahren zur Herstellung eines verklebten Verbundes umfasst wenigstens folgende Verfahrensschritte:
i. Bereitstellung eines elektrisch leitfähigen Substrats A oder einer elektrisch leitfähigen Trägerschicht T;
ii. Bereitstellung des Films D aus einer reaktiven hitzeaktivierbaren Klebemasse, wobei die reaktive hitzeaktivierbare Klebemasse wenigstens einen Elektrolyten enthält;
iii. Bereitstellung der Primerzusammensetzung, wobei die Primerzusammensetzung wenigstens folgende Bestandteile enthält:
   (a) wenigstens ein thermoplastisches Polyurethan; und
   (b) wenigstens ein Organosilan;
iv. Inkontaktbringung einer Oberfläche des Substrats A oder einer Oberfläche der Trägerschicht T mit einer ersten Oberfläche des Films D;
v. wobei vor der Inkontaktbringung zwischen dem Substrat A und der ersten Oberfläche des Films D oder der Trägerschicht T und der ersten Oberfläche des Films D die Primerzusammensetzung aus Schritt iii. als Schicht P aufgebracht wird; und
x. Aktivierung des Films D durch Wärmezufuhr von 40 °C oder mehr und unter Anwendung eines Verpressdruckes von mehr als 1 bar.

Überraschenderweise hat sich herausgestellt, dass mit dem erfindungsgemäßen Klebeband-System durch das erfindungsgemäße Verfahren ein verklebter Verbund hergestellt wird, der gegenüber dem Stand der Technik verbesserte Verklebungsfestigkeiten und Schockbeständigkeiten aufweist, aber gleichzeitig durch Anlegen einer Spannung elektrisch lösbar ist. Das elektrische Lösen wird durch den in der Klebemasse enthaltenen Elektrolyten ermöglicht. Durch das Verfahren zum elektrischen Lösen des Verbundes ist trotz der hohen Ausgangsverklebungsfestigkeiten eine Entfernung der Verklebung unter sehr geringem Kraftaufwand und ohne Rückstände des Klebefilms möglich. Dabei hat sich gezeigt, dass dies nur mit der angegebenen Primerzusammensetzung möglich ist und nicht mit anderen Primerzusammensetzungen aus dem Stand der Technik. Gleichzeitig hat sich gezeigt, dass bei der Herstellung des verklebten Verbundes die Aktivierungstemperatur für die reaktive hitzeaktivierbare Klebemasse gesenkt werden kann und dabei so hohe Verklebungsfestigkeiten erzielt werden wie im Stand der Technik bei nur höheren Temperaturen.

Dies ermöglicht die Verwendung des Klebeband-Systems und des Verfahrens zur Herstellung eines verklebten Verbundes unter Verwendung des Klebeband-Systems bzw. des verklebten Verbundes und des Verfahrens zum elektrischen Lösen in sensiblen Anwendungen, bei denen temperaturempfindliche Substrate vorliegen.

Klebebänder und Verfahren zum elektrischen Wiederablösen bzw. zur elektrischen Reduzierung der Klebkraft sind im Stand der Technik prinzipiell bekannt. So offenbart wie oben ausgeführt die EP 3 031 875 B1 ein solches elektrisches Verfahren. Die elektrisch ablösbare Klebemasse ist dabei eine solche auf Acrylat-Basis.

Es war vorliegend allerdings nicht abzusehen, dass sich auch eine hitzeaktivierbare Klebemasse, bei der die Klebkräfte an verschiedene Substrate vergleichsweise hoch sind, nach dem Verkleben elektrisch ablösen lässt, wobei überraschenderweise unter Verwendung des näher spezifizierten Primers gleichzeitig die Verklebungsfestigkeit vor dem Lösen verbessert ist und sogar wie beschrieben die Temperatur zur Aktivierung der reaktiven Klebemasse gesenkt werden kann.

Im Folgenden wird die Erfindung näher beschrieben.

Der Ausdruck "wenigstens ein" oder das Äquivalente "eines oder mehrere" bezieht sich dabei in branchenüblicher Weise auf die chemische Natur der entsprechenden Substanz und nicht auf deren Stoffmenge. Dem Fachmann ist klar, dass somit unter dem Ausdruck "ein Elektrolyt" eine Vielzahl von Elektrolyt-Molekülen zu verstehen ist.

"Gew.-%" steht dabei wie üblich für Gewichtsprozent. Dies gilt für sämtliche Ausführungen.

Im Rahmen der vorliegenden Erfindung wird unter einem "Klebeband-System" eine funktionale Einheit verstanden, die aus mehreren, aufeinander abgestimmten Komponenten besteht, welche gemeinsam eine spezifische technische Wirkung - insbesondere eine verbesserte Verklebung und elektrische Ablösbarkeit - erzielen. Das erfindungsgemäße Klebeband-System umfasst dabei stets den Film D aus einer reaktiven hitzeaktivierbaren Klebemasse und eine Primerzusammensetzung. Es ist wesentlich, dass die Primerzusammensetzung innerhalb dieses Systems zur Ausbildung einer eigenständigen, separaten Schicht vorgesehen ist, die in der Anwendung zwischen dem Film D und einem zu verklebenden Substrat oder einer Trägerschicht angeordnet wird.

### Substrat A oder Trägerschicht T (Schritt i.)

Gemäß Schritt i. wird ein elektrisch leitfähiges Substrat A oder eine elektrisch leitfähige Trägerschicht T bereitgestellt.

Der verklebte Verbund mit verbesserter Verklebungsfestigkeit bei gleichzeitig sehr guter elektrischer Ablösbarkeit wird somit wenigstens zwischen einem elektrisch leitfähigen Substrat A und einem Film D aus einer reaktiven hitzeaktivierbaren Klebemasse nach entsprechender Aktivierung oder wenigstens zwischen einer elektrisch leitfähigen Trägerschicht T und einem Film D aus einer reaktiven hitzeaktivierbaren Klebemasse nach entsprechender Aktivierung hergestellt.

Im Rahmen der vorliegenden Erfindung wird zwischen Substrat und Trägerschicht unterschieden. Unter einem Substrat wird ein Bauteil eines Artikels oder ein Artikel verstanden, der mit einer Verklebung unter Verwendung des reaktiven Klebefilms versehen werden soll.

Unter einer Trägerschicht wird eine weitere Schicht eines Klebebandes zusätzlich zu dem Film D der reaktiven Klebemasse verstanden, die zudem wie dem Fachmann für Klebebänder bekannt ist, eine die Klebemasse stützende, räumlich stabilisierende und somit tragende Funktion hat.

Die Substrate und Trägerschichten werden unten in der Beschreibung zu den möglichen Aufbauten des verklebten Verbundes näher ausgeführt.

### Film D aus einer reaktiven hitzeaktivierbaren Klebemasse (Schritt ii.) und Aktivierung der Klebemasse (Schritt x.)

Gemäß Schritt ii. wird ein Film D aus einer reaktiven hitzeaktivierbaren Klebemasse bereitgestellt. Der Film D ist Bestandteil des erfindungsgemäßen Klebeband-Systems.

Der Film aus der Klebemasse ist dabei eine Schicht beliebiger Geometrie, wie beispielsweise kreisförmig, quadratisch, in einer sonstigen Form rechteckig oder in beliebig anderer Geometrie. Der Film liegt insbesondere in Bahnform vor. Unter einer Bahn wird ein Objekt verstanden, dessen Länge (Erstreckung in x-Richtung) um ein Vielfaches größer ist als seine Breite (Erstreckung in y-Richtung) und die Breite entlang der gesamten Länge in etwa vorzugsweise genau gleichbleibend ausgebildet ist.

Die reaktive hitzeaktivierbare Klebemasse ist vor der Aktivierung bevorzugt nicht haftklebrig. Um diesem Umstand gerecht zu werden, wird die Schicht aus der Klebemasse als Film bezeichnet. Sofern im Rahmen dieser Erfindung dennoch von einem Klebefilm oder Klebeband die Rede ist, wird insbesondere darauf abgestellt, dass der Film insbesondere durch die Aktivierung eine Klebewirkung erzielen kann.

Der Film kann somit vor der Verwendung in dem erfindungsgemäßen Verfahren insbesondere als aktivierbares Klebeband bereitgestellt werden. Das Klebeband, insbesondere in Bahnform, kann entweder in Form einer Rolle, also in Form einer archimedischen Spirale auf sich selbst aufgerollt, hergestellt werden oder als Klebestreifen, wie er zum Beispiel in Form von Zuschnitten oder Stanzlingen erhalten wird. Der allgemeine Ausdruck Film bzw. "Klebefilm", "Klebeband", synonym auch "Klebestreifen" genannt, umfasst im Sinne dieser Erfindung alle flächigen Gebilde, wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist neben der Längsausdehnung (x-Richtung) und Breitenausdehnung (y-Richtung) auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise innerhalb von Toleranzen exakt gleich.

Die reaktive hitzeaktivierbare Klebemasse enthält wenigstens ein Elektrolyt.

Unter einem "Elektrolyt" wird vorliegend gemäß dem allgemeinen fachmännischen Verständnis eine chemische Verbindung verstanden, die im festen, flüssigen oder gelösten Zustand in Ionen dissoziiert ist und die sich unter dem Einfluss eines elektrischen Feldes gerichtet bewegt.

Der Elektrolyt ist ausgewählt aus der Gruppe bestehend aus ionischen Flüssigkeiten und Metallsalzen, wobei ionische Flüssigkeiten besonders bevorzugt sind.

Insbesondere durch eine oder mehrere ionische Flüssigkeiten als Elektrolyt lässt sich das Klebeband auf einfache Weise wieder ablösen, ohne dass die Klebeigenschaften des Klebebandes negativ beeinträchtigt sind. Ionische Flüssigkeiten haben dabei den Vorteil, dass sie sich gut und homogen in der Polymermatrix von Klebemassen verteilen lassen und das Wiederablösen schneller funktioniert als mit anderen Elektrolyten. Ferner sind die Bestandteile von ionischen Flüssigkeiten, insbesondere bei Raumtemperatur, nicht flüchtig. Ionische Flüssigkeiten sind zudem vergleichsweise hitzestabil und nicht brennbar sowie chemisch vergleichsweise stabil.

Ionische Flüssigkeiten sind daher als Elektrolyt im Rahmen des erfindungsgemäßen Trennverfahrens bzw. Verfahrens zum elektrischen Lösen besonders gut geeignet. Wenn eine Spannung angelegt wird, kommt es zu einer Absenkung der Klebkraft der die ionische Flüssigkeit enthaltenden Klebemasse an wenigstens ein Substrat, wodurch eine adhäsive Spaltung zwischen der Klebemasse und der verklebten Oberfläche erzielt wird.

Im Rahmen der vorliegenden Erfindung sind prinzipiell alle ionischen Flüssigkeiten geeignet.

Ionische Flüssigkeiten sind im Rahmen der vorliegenden Erfindung Salze, die bei 100 °C, bevorzugt bei Raumtemperatur, also 23 °C, flüssig sind. Ionische Flüssigkeiten enthalten dementsprechend Anionen und Kationen. Solche ionischen Flüssigkeiten, die bei 100 °C flüssig sind, aber bei 23 °C fest, werden bevorzugt durch geeignete Verfahrensschritte verarbeitbar gemacht, wie insbesondere und beispielsweise durch Lösen in einem Lösungsmittel.

Bevorzugt sind ionische Flüssigkeiten, die bei 23 °C flüssig sind.

Die im Rahmen der vorliegenden Erfindung bevorzugt verwendeten ionischen Flüssigkeiten enthalten wenigstens ein Anion und wenigstens ein Kation. Hierbei ist es auch denkbar, dass die ionische Flüssigkeit zwei oder mehr Typen an Anionen und/oder zwei oder mehr Typen an Kationen umfasst. Ferner ist es denkbar, dass der Klebemasse zwei oder mehrere verschiedene ionische Flüssigkeiten zugegeben werden bzw. die Klebemasse dann zwei oder mehrere verschiedene ionische Flüssigkeiten enthält.

Bevorzugt ist das Anion der ionischen Flüssigkeit ausgewählt aus der Gruppe bestehend aus Br⁻, AlCl₄⁻, Al₂Cl₇⁻, NO₃⁻, BF₄⁻, PF₆⁻, CH₃COO⁻, CF₃COO⁻, CF₃CO₃⁻, CF₃SO₃, (CF₃SO₂)₂N⁻, (CF₃SO₂)₃C, AsF₆⁻, SbF₆⁻, CF₃(CF₂)₃SO₃⁻ (CF₃CF₂SO₂)₂N⁻, CF₃CF₂CF₂COO⁻, N(CN)₂⁻ und (FSO₂)₂N⁻.

Besonders bevorzugt ist das Anion ausgewählt aus (CF₃SO₂)₂N⁻ und (FSO₂)₂N⁻. Hiermit wird eine besonders hohe Reduzierung der Klebkraft durch Anlegen einer Spannung und damit eine besonders gute elektrische Ablösbarkeit erzielt. Insbesondere gelingt das (Wieder-)Ablösen besonders schnell und es verbleiben keine Rückstände.

Bevorzugt ist das Kation der ionischen Flüssigkeit ausgewählt aus der Gruppe bestehend aus Kationen auf Imidazolium-Basis, Kationen auf Pyridinium-Basis, Kationen auf Pyrrolidinium-Basis und Kationen auf Ammonium-Basis.

Besonders bevorzugt ist das Kation ausgewählt aus der Gruppe bestehend aus Kationen auf Imidazolium-Basis. Hiermit wird eine besonders hohe Reduzierung der Klebkraft durch Anlegen einer Spannung und damit eine besonders gute elektrische Ablösbarkeit erzielt. Insbesondere gelingt das (Wieder-)Ablösen besonders schnell und es verbleiben keine Rückstände.

Ganz besonders bevorzugt ist das Kation ausgewählt aus der Gruppe bestehend aus 1-Ethyl-3-methylimidazolium und 1-Butyl-3-methylimidazolium.

Besonders bevorzugt ist der Elektrolyt ausgewählt aus der Gruppe bestehend aus den ionischen Flüssigkeiten 1-Ethyl-3-methylimidazolium-bis(trifluormethylsulfonyl)imid (EMIM-TFSI) und 1-Ethyl-3-methylimidazolium-bis(fluorsulfonyl)imid (EMIM-FSI). Hiermit wird eine besonders hohe Reduzierung der Klebkraft durch Anlegen einer Spannung und damit eine besonders gute elektrische Ablösbarkeit erzielt. Insbesondere gelingt das (Wieder-)Ablösen besonders schnell und es verbleiben keine Rückstände.

Bevorzugt ist es, dass die reaktive hitzeaktivierbare Klebemasse des Films D 1 bis 10 Gew.-%, besonders bevorzugt 2 bis 8 Gew.-%, an Elektrolyten, bevorzugt ionischen Flüssigkeiten, bezogen auf das Gesamtgewicht der Klebemasse ohne Lösungsmittel, enthält.

Mit einer derartigen bevorzugten bzw. besonders bevorzugten Menge an Elektrolyten, insbesondere ionischen Flüssigkeiten, wird ein vergleichsweise schnelles elektrisches Ablösen ermöglicht, wobei gleichzeitig die Adhäsion der Klebemasseschicht an die benachbarten Schichten, insbesondere wenigstens ein Substrat oder wenigstens eine Trägerschicht, vor dem Ablösen nicht negativ beeinträchtigt ist.

Die Masse der Klebemasseschicht D ist eine reaktive hitzeaktivierbare Klebemasse.

Hitzeaktivierbare Klebmassen können grundsätzlich in zwei Kategorien unterschieden werden, nämlich in rein physikalisch hitzeaktivierbare Klebemassen und in reaktive hitzeaktivierbare Klebemassen.

### Physikalisch hitzeaktivierbare Klebemassen

Diese Klebemassen, auch als "Schmelzklebemassen" bezeichnet, sind bei Raumtemperatur nicht oder schwach selbstklebend. Die Klebemasse wird erst mit der Hitze aktiviert und dabei selbstklebrig. Dafür ist ein eine entsprechend hohe Glasübergangstemperatur der Klebemasse verantwortlich, so dass die Aktivierungstemperatur zur Erzielung einer hinreichenden Klebrigkeit - in der Regel einige zig bis hundert Grad Celsius - oberhalb der Raumtemperatur liegt. Es tritt bereits vor dem Abbinden der Masse aufgrund der selbstklebenden Eigenschaften eine Klebewirkung ein. Nach dem Zusammenfügen der Klebepartner bindet die physikalisch hitzeaktivierbare Klebemasse beim Abkühlen unter Verfestigung physikalisch ab, so dass die Klebewirkung im abgekühlten Zustand erhalten bleibt und dort die eigentlichen Klebkräfte ausgebildet hat.

Je mehr Wärme, Druck und/oder Zeit bei der Verklebung angewandt wird, desto fester wird in der Regel die Verbindung der beiden zu verklebenden Materialien. Hiermit können regelmäßig maximale Verbundfestigkeiten unter technisch leichten Verarbeitungs-Bedingungen verwirklicht werden. Durch das physikalische Aufschmelzen wird eine hohe Verklebungsfestigkeit und damit Klebwirkung erzielt. Die Massen sind damit rein physikalisch hitzeaktivierbare Klebemassen.

### Reaktive hitzeaktivierbare Klebemassen

Reaktive hitzeaktivierbare Klebemassen (auch als "Reaktivklebemassen" bezeichnet) sind Polymersysteme, die funktionelle Gruppen derart aufweisen, dass bei Wärmezufuhr eine chemische Reaktion stattfindet, wobei die Klebemasse chemisch abbindet, und eine höhere innere Festigkeit hervorruft. Gleichfalls kann es vorteilhaft sein, die Reaktivklebemassen derart auszugestalten, dass sie bei erhöhter Temperatur weicher und/oder fließfähiger werden, um sich dem Klebverbund optimal anzupassen; dies wird insbesondere und bevorzugt durch eine thermoplastische Komponente erreicht. Durch die genannte chemische Reaktion und auch das physikalische Aufschmelzen wird eine hohe Verklebungsfestigkeit und damit Klebwirkung erzielt.

Wie sich aus dem Begriff "hitzeaktivierbar" ableiten lässt, erfolgt die Aktivierung, die zum Verklebungseffekt führt, durch Wärmezufuhr. Dies bedeutet, dass diese Klebemassen bei Raumtemperatur, insbesondere bei 23 °C, nicht aktiviert werden, das heißt der Effekt, der zur dauerhaften Verklebung führt, nicht ausgelöst wird.

Dementsprechend umfasst das erfindungsgemäße Verfahren zur Herstellung des verklebten Verbundes den Schritt x. Aktivierung des Films D durch unter anderem eine Wärmezufuhr von 40 °C oder mehr. Bevorzugt erfolgt die Aktivierung bei einer Temperatur von 40 bis 120 °C, besonders bevorzugt 50 bis 120 °C, ganz besonders bevorzugt bei einer Temperatur von 50 bis 75 °C. Die angegebenen Temperaturen, bei denen die Aktivierung erfolgt, beziehen sich insbesondere auf die Temperaturen in der zu aktivierenden Klebemasse. Diese Temperaturen werden über entsprechende Wärmezufuhr erzielt.

Überraschenderweise hat es sich herausgestellt, dass mit dem erfindungsgemäßen Verfahren auch bei 40 bis 75 °C, insbesondere 50 bis 75 °C, sehr hohe Verklebungsfestigkeiten erzielt werden können, wodurch es für temperaturempfindliche Substrate und ggf. Trägermaterialien geeignet ist.

Die Dauer der Aktivierung beträgt bevorzugt von 10 Sekunden bis 10 Minuten, besonders bevorzugt 10 Sekunden bis 8 Minuten. Gemäß bevorzugter Ausführungsformen der Erfindung beträgt die Dauer 40 Sekunden bis 8 Minuten. Gemäß bevorzugter Ausführungsformen der Erfindung beträgt die Dauer 30 Sekunden bis 6 Minuten, besonders bevorzugt 60 Sekunden bis 3 Minuten. Mit diesen vergleichsweise kurzen Aktivierungszeiten wird eine schnelle und sehr stabile Verklebung erzielt.

Dabei wird bei einer hohen Aktivierungstemperatur in den genannten Temperaturbereichen bevorzugt eine entsprechend kurze Aktivierungsdauer gewählt, während bei niedrigen Temperaturen eine entsprechend längere Aktivierungsdauer gewählt wird. Dies hängt insbesondere auch von der zu erzielenden Verklebungsfestigkeit ab.

Die Aktivierung erfolgt zudem unter Anwendung eines Druckes, auch Verpressdruck genannt. Der Verpressdruck beträgt mehr als 1 bar und bevorzugt von 1 bis 15 bar, besonders bevorzugt 2 bis 12 bar.

Die Aktivierung erfolgt insbesondere und bevorzugt durch Anwendung einer Heizpresse auf den zu verklebenden Verbund. Hierdurch erfolgt der gewünschte Hitze- und Druckeintrag auf das gesamte System.

Vor der Aktivierung erfolgt, insbesondere im Fall eines getrockneten und damit vergleichsweise rigiden Films D, bevorzugt eine sogenannte Vor-Laminierung, um eine optimale Benetzung des Substrates bzw. der zu verklebenden Fläche mit der hitzeaktivierbaren Klebemasse zu erzielen. Dies erfolgt insbesondere und beispielsweise durch das Vorwärmen der zu verklebenden Substrate.

Bevorzugt werden hierzu die zu verklebenden Substrate auf eine Temperatur von 50 bis zu 70 °C angewärmt. Das Aufbringen der Klebemasseschicht auf das jeweilige Substrat erfolgt bevorzugt mit einem Druck von 1 bis 3 bar für eine Dauer von 5 bis 20 Sekunden. Hierdurch wird ein gleichmäßiges Auffließen der Klebemasse auf das Substrat vor der Aktivierung sichergestellt.

Im Fall des Verklebens auf eine leitfähige Trägerschicht wird insbesondere und bevorzugt dann ein Erwärmen der Trägerschicht durchgeführt, wenn der bereitgestellte Film D bereits getrocknet ist, um auch hier das Auffließen zu erleichtern oder sicherzustellen.

Im Rahmen der vorliegenden Erfindung wird die Primerzusammensetzung bei den beschriebenen Vorwärm-Schritten bevorzugt zuvor auf das Substrat oder die Trägerschicht aufgetragen.

Bevorzugt enthält die reaktive hitzeaktivierbare Klebemasse mindestens ein thermoplastisches Elastomer. Bei dem thermoplastischen Elastomer kann es sich prinzipiell um alle thermoplastischen Polymere handeln, die für die Verwendung in hitzeaktivierbaren Klebemassen geeignet sind, wie insbesondere Polyurethane, Polyester, Polyamide.

Besonders bevorzugt ist das thermoplastische Elastomer thermoplastisches Polyurethan (TPU). Das Polyurethan ist bevorzugt ein semikristallines Polyurethan.

Geeignete Polyurethane sind beispielweise die kommerziell erhältlichen Produkte aus der IROSTIC^{®} Familie der Firma Huntsman.

Bevorzugt enthält die hitzeaktivierbare Klebemasse 65 bis 98 Gew.-%, besonders bevorzugt 75 bis 96 Gew.-%, ganz besonders bevorzugt 80 bis 94 Gew.-%, an thermoplastischen Elastomeren, insbesondere thermoplastischen Polyurethanen, bevorzugt semikristallinen, bevorzugt Hydroxy-terminierten, thermoplastischen Polyurethanen, bezogen auf das Gesamtgewicht der Klebemasse ohne Lösungsmittel.

Reaktive hitzeaktivierbare Klebemassen können auf unterschiedlichen Polymeren und Vernetzungschemikalien und -mechanismen basieren.

Bevorzugt umfasst das thermoplastische Elastomer funktionelle Gruppen, die mit Isocyanat reagieren können. Die reaktive hitzeaktivierbare Klebemasse des Films D enthält hierbei als Vernetzer eine Isocyanat-haltige Verbindung.

Auch hier ist als thermoplastisches Elastomer wenigstens ein thermoplastisches Polyurethan, und wiederum bevorzugt semikristallines thermoplastisches Polyurethan, bevorzugt.

Die funktionellen Gruppen, die mit Isocyanat reagieren können, sind beispielsweise und insbesondere Hydroxy-Gruppen, Amino-Gruppen oder Urethan-Gruppen. Gemäß besonders bevorzugter Ausführungsformen der Erfindung handelt es sich bei den funktionellen Gruppen um Hydroxy-Gruppen.

Eine derartige reaktive hitzeaktivierbare Klebemasse lässt sich nach der Verklebung überraschenderweise besonders gut wieder elektrisch ablösen, wobei die Verklebungsfestigkeit durch Anlegen einer Spannung extrem reduziert wird. Zudem erfolgt das Trennen auf eine saubere Weise; das heißt, dass an dem Substrat entweder keine Rückstände der Klebemasse vorhanden sind oder sich diese auf einfache Weise, zum Beispiel manuell, entfernen lassen.

Ferner wurde überraschenderweise gefunden, dass es je nach Art und Fläche der Rückstände der Klebemasse auch möglich ist, diese ohne Entfernen wiederzuverwenden und das Substrat somit über die Rückstände neu zu verkleben, was wiederum ökologische Vorteile mit sich bringt.

Gemäß bevorzugter Ausführungsformen der Erfindung werden Diisocyanat-Verbindungen als Isocyanat-haltige Verbindung eingesetzt und dabei insbesondere Toluylen-diisocyanat-Verbindungen (TDI-Verbindungen), wie beispielsweise TDI-Dimere, erhältlich beispielsweise als Dancure^{®} 999 (1,3-Bis(3-isocyanato-4-methylphenyl)-1,3-diazetidin-2,4-dion; Feststoff)), und/oder Isophoron-Diisocyanate (IPDI).

Bevorzugt enthält die hitzeaktivierbare Klebemasse 1 Gew.-% bis 25 Gew.-%, besonders bevorzugt 2 Gew.-% bis 15 Gew.-%, ganz besonders vorteilhaft 4 Gew.-% bis 12 Gew.-%, an Isocyanat-haltigen Verbindungen, bezogen auf das Gesamtgewicht der Klebemasse.

Bevorzugt basiert die reaktive hitzeaktivierbare Klebemasse auf einem organischen Lösungsmittel und ist damit eine lösungsmittelbasierte Klebemasse. Lösungsmittelbasiert bedeutet im Rahmen der vorliegenden Erfindung, dass bei der Vermischung der Bestandteile bei der Herstellung der Klebemasse - und sofern durch deren Viskositäten erforderlich - eines oder mehrere organische Lösungsmittel verwendet werden aber kein Wasser oder ein anderes anorganisches Lösungsmittel.

Das organische Lösungsmittel dient dem Zweck das in der Klebemasse verwendete Polymer, insbesondere thermoplastische Elastomer, wie beispielsweise thermoplastisches Polyurethan, zu lösen. Das verwendete organische Lösungsmittel ist bevorzugt wasserfrei. Das organische Lösungsmittel ist gemäß bevorzugter und beispielhafter Ausführungsformen ausgewählt aus der Gruppe bestehend aus Methylethylketon (MEK), Butanon, Aceton, Toluol, Ethylacetat und Gemischen daraus.

Bevorzugt und beispielsweise handelt es sich bei dem Lösungsmittel um wasserfreies Methylethylketon (MEK). Die Erfindung soll aber nicht auf die genannten beispielhaften Lösungsmittel beschränkt sein. Es versteht sich, dass auch andere Lösungsmittel geeignet sind, in denen das verwendete Polymer, insbesondere thermoplastische Elastomer, wie beispielsweise thermoplastische Polyurethan lösbar ist. Daher ist das organische Lösungsmittel ausgewählt aus der Gruppe der Lösungsmittel, in denen das thermoplastische Polyurethan lösbar ist.

Gemäß vorteilhafter Ausführungsformen der Erfindung umfasst die reaktive hitzeaktivierbare Klebemasse des Films D bevorzugt zusätzlich eine Verbindung aus der Gruppe der Epoxide und/oder Epoxy-Verbindungen. Bevorzugt sind ein-, di-, tri- oder polyfunktionelle Epoxide und/oder Epoxy-Verbinden. Dazu zählen zum Beispiel bei 23 °C flüssige / viskose Verbindungen wie N,N,N',N'-Tetrakis(2,3-epoxypropyl)-m-xylol-a,a'-diamin und/oder 7-oxabicyclo-[4.1.0]hept-3-ylmethyl 7-oxabicyclo[4.1.0]heptane-3-carboxylate und/oder Verbindungen mit einem Schmelz- / Erweichungspunkt über 23 °C (sog. Epoxy- / Epoxidharze) wie Epiclon^{®} N-673. Geeignet sind beispielsweise und insbesondere Bisphenol F-EpoxyHarze, welche zum Beispiel unter der Serie mit dem Handelsnamen Epiclon^{®} erhältlich sind.

Die Klebemasse des Films D kann ferner weitere übliche Additive, wie Kompatibilisatoren, Emulgatoren, Füllstoffe, Pigmente, Amine und Alterungsschutzmittel enthalten.

Als Kompatibilisatoren werden bevorzugt niedermolekulare Polyether, wie Polyethylenglykol (PEG) und/oder Polypropylenglykol (PPG), Polyamine, Polyvinylpyrrolidone oder aliphatische Polyester eingesetzt, die mit der Klebemasse homogen mischbar sind.

Die reaktive hitzeaktivierbare Klebemasse wird durch Mischen der Bestandteile erzeugt, insbesondere wie beschrieben unter Zuhilfenahme von organischen Lösungsmitteln zum Lösen einzelner Bestandteile, insbesondere des thermoplastischen Elastomers.

Im Anschluss wird die Masse - insbesondere aus Lösung - als Schicht mit definierter Schichtdicke und damit in Form eines Films ausgestrichen und anschließend getrocknet, wobei das Lösungsmittel verdampft.

### Primerzusammensetzung und Primerschicht P (Schritt iii.)

Das erfindungsgemäße Klebeband-System umfasst eine Primerzusammensetzung, die zur Ausbildung einer separaten Schicht vorgesehen ist.

Der Begriff "Primer" ist dem Fachmann im Zusammenhang mit Klebeverbindungen bekannt. Im erfindungsgemäßen Sinne bedeutet der Begriff "Primer" insbesondere eine zwischen zwei Materialschichten aufgetragene Grundierung, die in der Lage ist (entweder auf chemischer oder physikalischer Grundlage), mit den zwei Materialschichten zu interagieren und deren Haftung aneinander zu ermöglichen.

Der Primer wird in der Regel als ein formuliertes Produkt (das in der Regel mehr als eine Komponente enthält) betrachtet, welches nach jeweils geeigneten Verfahren aus der flüssigen Phase aufgetragen wird (Eintauchen in die Oberfläche, Streichen, Sprühen usw.). Nach dieser Definition sollte der Primer nicht nur die Fähigkeit haben, die Haftung zu ermöglichen, sondern auch eine gleichmäßige Grundierungsschicht auf der Oberfläche des Substrats zu bilden, indem seine Viskosität, seine Benetzungseigenschaften, seine Trocknungsgeschwindigkeit usw. angepasst werden.

Im Rahmen der vorliegenden Erfindung wird insbesondere die Zusammensetzung des Primers im Hinblick auf deren Bestandteile und damit die "Primerzusammensetzung" betrachtet und beschrieben.

Dadurch, dass die erfindungsgemäß verwendete Primerzusammensetzung die Kombination aus (a) wenigstens einem thermoplastischen Polyurethan und (b) wenigstens einem Organosilan enthält, weist ein verklebter Verbund aus wenigstens einem Substrat oder wenigstens einer Trägerschicht und dem aktivierten Klebefilm unter Verwendung der Primerzusammensetzung zwischen Substrat oder Trägerschicht und Klebefilm überraschenderweise verbesserte Verklebungsfestigkeiten auf. Gleichzeitig kann die Aktivierungstemperatur des Klebefilms deutlich reduziert werden.

Die erfindungsgemäß verwendete Primerzusammensetzung ermöglicht damit die Herstellung einer stärkeren Klebeverbindung auch bei temperaturempfindlichen Substraten.

Das erfindungsgemäß enthaltene (a) thermoplastische Polyurethan weist bevorzugt keine freien Isocyanat-Gruppen auf. Der Gehalt an freien Isocyanat-Gruppen wird insbesondere gemäß IR-Spektroskopie bestimmt. Polyurethane mit freien Isocyanat-Gruppen, insbesondere erhalten als Polyurethane mit terminalen Isocyanat-Gruppen aufgrund eines Überschusses an Di- und/ oder Poly-Isocyanaten während der Herstellung des Polyurethans, sind feuchtehärtend und härten somit bei Kontakt mit Luftfeuchtigkeit aus.

Das erfindungsgemäß enthaltene (a) thermoplastische Polyurethan ist bevorzugt Hydroxy-Gruppen terminiert und weist somit bevorzugt terminale OH-Gruppen auf. Ein solches Polyurethan ist nicht feuchtehärtend und reagiert somit nicht mit Luftfeuchtigkeit. Es ist daher besonders gut zur Herstellung der erfindungsgemäßen Primerzusammensetzung geeignet.

Gemäß bevorzugter Ausführungsformen ist das Polyurethan das chemische Umsetzungsprodukt aus a1) mindestens einem Diol und/oder Polyol, und a2) mindestens einem Di- und/ oder Poly-Isocyanat, wobei bei der Umsetzung bevorzugt ein Überschuss an a1) Diolen und/oder Polyolen gegenüber den a2) Di- und/ oder Poly-Isocyanaten gewählt wird.

Als Diole/ Polyole kommen grundsätzlich alle bekannten aliphatischen oder aromatischen zweifach oder mehrfach hydroxyl-funktionalisierten Stoffe in Frage, insbesondere alle Polyester-Diole/-Polyole, einschließlicher aller Polycaprolacton-Diole/-Polyole, alle Polyestercarbonat-Diole/-Polyole, alle Polyether-Diole/-Polyole sowie alle Polybutadien-Diole/-Polyole sowie daraus abgeleitete Stoffe oder Derivate dieser Stoffe. Weiterhin kommen auch sogenannte Kettenverlängerer und/oder Vernetzer in Frage, worunter hier zweifach oder mehrfach hydroxyl-funktionalisierte Stoffe verstanden werden, die keine Poly-Verbindungen sind.

Erfindungsgemäß einsetzbare Polyester-Diole/-Polyole sind Polyester mit endständig gebundenen Hydroxyl-Gruppen.

Polyester-Diole haben zwei endständig gebundene Hydroxylgruppen, sind also difunktionell. Bei Polyester-Polyolen ist die Zahl der endständig gebundenen Hydroxylgruppen nicht klar definiert. Es können zwei oder mehr Hydroxylgruppen pro Molekül sein. In dieser Schrift werden unter Polyester-Polyolen solche mit mehr als zwei Hydroxylgruppen pro Molekül verstanden. Erfindungsgemäß einsetzbare Polyester-Diole/-Polyole werden im Allgemeinen durch Polykondensation aus Diolen/Polyolen und Di-/Polycarbonsäuren gewonnen oder im Falle von Polycaprolacton-Polyolen durch Ringöffnungspolymerisation aus ε-Caprolacton und einem di- oder polyfunktionellem Startermolekül.

Polyestercarbonat-Diole sind zweifach hydroxyl-funktionalisierte Polyester, in deren Molekülkette auch mindestens eine Kohlensäureestergruppe enthalten ist. Sie können zum Beispiel durch Poly-Reaktion eines Diols, einer Dicarbonsäure und Dimethylcarbonat (DMC) oder Diphenylcarbonat (DPC) erhalten werden. Bei Polyestercarbonat-Polyolen ist die Zahl der endständig gebundenen Hydroxylgruppen nicht klar definiert. Es können zwei oder mehr Hydroxylgruppen pro Molekül sein. In dieser Schrift werden unter Polyestercarbonat-Polyolen solche mit mehr als zwei Hydroxylgruppen pro Molekül verstanden.

Erfindungsgemäß einsetzbare Polyether-Diole/-Polyole sind Polyether mit endständig gebundenen Hydroxyl-Gruppen. Polyether-Diole haben zwei endständig gebundene Hydroxylgruppen, sind also difunktionell. Bei Polyether-Polyolen ist die Zahl der endständig gebundenen Hydroxylgruppen nicht klar definiert. Es können zwei oder mehr Hydroxylgruppen pro Molekül sein. In dieser Schrift werden unter Polyether-Polyolen solche mit mehr als zwei Hydroxylgruppen pro Molekül verstanden. Erfindungsgemäß einsetzbare Polyether-Diole/- Polyole werden vor allem aus Ethylenoxid, Propylenoxid oder Tetrahydrofuran durch ringöffnende Polymerisation bzw. Copolymerisation unter Verwendung eines die Funktionalität bestimmenden Startermoleküls hergestellt.

Polybutadien-Diole sind zweifach hydroxyl-funktionalisierte Polybutadiene, die in einem anionischen Polymerisationsverfahren aus Butadien hergestellt werden. Bekannte Handelsprodukte sind zum Beispiel die Krasol^{®}-Typen der Firma Cray Valley. Polybutadien-Polyole können zwei oder mehr Hydroxylgruppen pro Molekül tragen. In dieser Schrift werden unter Polybutadien-Polyolen solche mit mehr als zwei Hydroxylgruppen pro Molekül verstanden. Sie werden in einem radikalischen Polymerisationsverfahren aus Butadien hergestellt. Bekannte Handelsprodukte sind zum Beispiel die Poly bd^{®}-Typen der Firma Cray Valley.

Beispiele für Kettenverlängerer sind 1,2-Ethandiol, 1,2-Propandiol, 1,3-Propandiol, 2-Methyl-1,3-Propandiol, 1,4-Butandiol, 2,3-Butandiol, Propylenglykol, Dipropylenglykol, 1,4-Cyclohexandimethanol oder 2-Ethy-1,3-hexandiol.

Beispiele für Vernetzer sind Glycerin, Trimethylolpropan oder 1,2,4-Butantriol.

Gemäß besonders vorteilhafter Ausführungsformen der Erfindung ist das a1) mindestens eine Diol und/oder Polyol ausgewählt aus der Gruppe bestehend aus Polyester-Diolen, Polyester-Polyolen, Polyestercarbonat-Diolen und Polyestercarbonat-Polyolen, wobei Polyester-Diole und/oder Polyestercarbonat-Diole wiederum besonders bevorzugt sind.

Erfindungsgemäß einsetzbare a2) Di- und/oder Poly-Isocyanate sind alle bekannten aliphatischen und/oder aromatischen Di-Isocyanate und/oder Poly-Isocyanate. Di-Isocyanate tragen zwei Isocyanat-Gruppen pro Molekül, sind also difunktionell. Poly-Isocyanate tragen zwei oder mehr Isocyanat-Gruppen pro Molekül. In dieser Schrift werden unter Poly-Isocyanaten solche mit mehr als zwei Isocyanat-Gruppen pro Molekül verstanden.

Beispiele für in Frage kommende Di- und/oder Poly-Isocyanate sind 1-Isocyanatomethyl-3-isocyanato-1,5,5-trimethylcyclohexan (Isophorondiisocyanat, IPDI), Hexan-1,6-diisocyanat (Hexamethylendiisocyanat, HDI), Dicyclohexylmethan-4,4'-diisocyanat (H12MDI), Toluylendiisocyanat, Diphenylmethan-4,4'-diisocyanat (4,4' MDI) und/oder m-Tetramethylxylen-diisocyanat (TMXDI), Gemische der genannten Isocyanate oder chemisch daraus abgeleitete Isocyanate, zum Beispiel dimerisierte, trimerisierte oder polymerisierte Typen, die beispielsweise Harnstoff-, Uretdion- oder Isocyanuratgruppen enthalten.

Besonders bevorzugt werden difunktionelle Ausgangsstoffe, also Diole und Di-Isocyanate eingesetzt.

Gemäß vorteilhafter Ausführungsformen wird als Di-Isocyanat a2) Diphenylmethan-4,4'-diisocyanat (4,4' MDI) und/oder Hexan-1,6-diisocyanat (Hexamethylendiisocyanat, HDI) verwendet, wobei Diphenylmethan-4,4'-diisocyanat (4,4' MDI) besonders bevorzugt ist.

Gemäß vorteilhafter Ausführungsformen wird ein Polyester-Polyurethan als thermoplastisches Polyurethan a) eingesetzt. Hierzu wird als Diol-Komponente bevorzugt zunächst ein Reaktionsprodukt eines Diols mit einer Carbonsäure, insbesondere einer Dicarbonsäure, als Makro-Diol erhalten. Beispielsweise wird als Diol a1) 1,6-Hexandiol und als Dicarbonsäure Adipinsäure verwendet.

Um die Reaktion der Diole/Polyole mit den Di-/Poly-Isocyanaten zu beschleunigen, können ein oder mehrere dem Fachmann bekannte Katalysatoren wie zum Beispiel tertiäre Amine, bismut- oder zinnorganische Verbindungen eingesetzt werden, um nur einige zu nennen. Sehr vorteilhaft können Bismut und Kohlenstoff enthaltende Katalysatoren eingesetzt werden, bevorzugt ein Bismutcarboxylat oder ein Bismutcarboxylat-Derivat, insbesondere Bismuttrisneodecanoat, CAS-Nr.: 34364-26-6. Die Konzentration des Katalysators wird auf die verwendeten Diole/Polyole sowie Di-/Poly-Isocyanate abgestimmt. Im Allgemeinen liegt sie zwischen 0,01 Gew.-% und 0,5 Gew.-% des herzustellenden Polyurethans.

Das erfindungsgemäß enthaltene thermoplastische Polyurethan (a) ist bevorzugt ein semikristallines thermoplastisches Polyurethan. Hiermit wird die der Erfindung zugrunde liegende Aufgabe besonders gut gelöst.

Das erfindungsgemäß enthaltene thermoplastische Polyurethan (a) weist bevorzugt einen Speichermodul G', bestimmt mittels DMA, von mehr als 1 MPa auf. Besonders bevorzugt beträgt der Speichermodul G' mehr als 5 MPa, wiederum bevorzugt mehr als 15 MPa, insbesondere bis zu 100 MPa, besonders bevorzugt bis zu 50 MPa.

Der Speichermodul G' wird mittels dynamisch mechanischer Analyse (DMA) in Anlehnung an DIN EN ISO 6721-1:2019-09 bestimmt.

Die Messung wird durchgeführt mit einem TA HR20 (TA-Instrument) Rheometer. Das granulatartige Material, ungefähr 0,1 g, wird auf den runden, unteren Stempel des Rheometers aufgelegt. Die Stempeltemperatur wird über den Schmelzpunkt des zu untersuchenden Materials gebracht und das Material so aufgeschmolzen. Mit einem flachen Metallstempel wird das aufgeschmolzene Material plattgedrückt. Der Prozess wird 3- bis 4-mal wiederholt, bis die erreichte Schichtdicke ca. 1 mm beträgt. Anschließend wird der obere Stempel in Kontakt mit dem Polymerfilm gebracht. Aus der Fuge ausgetretenes Material wird entfernt.

Die Ofentüren, die die parallelen Platten und Wellen des Rheometers umgeben, werden geschlossen und die Temperatur auf 100 °C erhöht und für 5 Minuten gehalten, um eventuelle Restspannungen zu entspannen. Die Axialkraft wird dann auf 0 gesetzt, um den Kontakt zwischen dem Material und den Platten aufrechtzuerhalten. Die Temperatur wurde auf - 50°C eingestellt und dann von - 50°C auf 200 °C mit einer Rate von 5 °C/min erhöht, während die parallelen Platten mit einer Frequenz von 1 Hz und einer anfänglichen Dehnungsamplitude von 0,15 % oszillierten. Die Dehnung wurde um 50 % des aktuellen Werts erhöht, sobald das gemessene Drehmoment unter 1 g-cm fiel, mit einer maximal zulässigen Dehnungsamplitude von 10 %.

Ein geeignetes thermoplastisches Polyester-Polyurethan ist beispielsweise unter dem Handelsnamen Laricol 1460 von der Firma Coim erhältlich. Ein weiteres geeignetes thermoplastisches Polyester-Polyurethan ist unter dem Handelsnamen IROSTIC^{®} S-6558-06 von der Firma Huntsman, erhältlich.

Die erfindungsgemäß verwendete Primerzusammensetzung enthält gemäß bevorzugter Ausführungsformen des Klebeband-Systems, insbesondere beim Verfahren zur Herstellung des verklebten Verbundes, also beim Aufbringen der Primerzusammensetzung auf wenigstens eine Oberfläche eines zu verklebenden Substrates und/oder einer zu verklebenden Trägerschicht und/oder Films der reaktiven Klebemasse wenigstens ein Lösungsmittel, insbesondere wenigstens ein organisches Lösungsmittel. Das Lösungsmittel in der Primerzusammensetzung dient dem Zweck das in der Primerzusammensetzung verwendete thermoplastische Polyurethan zu lösen. Bevorzugt ist somit ein Klebeband-System oder ein Verfahren zur Herstellung eines verklebten Verbundes, wobei die Primerzusammensetzung, die zur Ausbildung einer separaten Schicht vorgesehen ist, bzw. die in Schritt iii. bereitgestellte und in Schritt v. aufgebrachte Primerzusammensetzung wenigstens ein organisches Lösungsmittel enthält, wobei das thermoplastische Polyurethan (a) der Primerzusammensetzung in dem Lösungsmittel lösbar ist.

Bevorzugt und beispielsweise handelt es sich um ein wasserfreies Gemisch aus 80 Gew.-% Ethylacetat und 20 Gew.-% Methylethylketon (MEK) oder um 100-%-iges Methylethylketon oder um Aceton. Die Erfindung soll aber nicht auf diese beispielhaften Lösungsmittel beschränkt sein. Es versteht sich, dass auch andere Lösungsmittel geeignet sind, in denen das thermoplastische Polyurethan lösbar ist.

Das Lösungsmittel verdampft insbesondere nach dem Aufbringen des Primers, sodass der Primer bzw. die aufgetragene Primerschicht P getrocknet wird.

Im Rahmen der vorliegenden Erfindung wird daher zum einen die ungetrocknete Primerzusammensetzung betrachtet und zum anderen die getrocknete Primerzusammensetzung, die aus dem Verdampfen von Lösungsmittel und Wasser, insbesondere aus der aufgetragenen Primerschicht P, resultiert.

Gemäß vorteilhafter Ausführungsformen der Erfindung enthält die Primerzusammensetzung vor dem Trocknen 2 bis 10 Gew.-%, bevorzugt 3 bis 8 Gew.-%, besonders bevorzugt 3 bis 5 Gew.-%, bezogen auf das Gesamtgewicht der ungetrockneten Primerzusammensetzung, des wenigstens einen thermoplastischen Polyurethans (a).

Bevorzugt enthält die getrocknete Primerzusammensetzung 70 bis 90 Gew.-%, besonders bevorzugt 70 bis 85 Gew.-%, ganz besonders bevorzugt 75 bis 85 Gew.-%, des wenigstens einen thermoplastischen Polyurethans (a), jeweils bezogen auf das Gesamtgewicht der getrockneten Primerzusammensetzung.

Für den Fall, dass zwei oder mehrere verschiedene thermoplastische Polyurethane als Bestandteil (a) enthalten sind, beziehen sich die angegebenen Mengen auf die Gesamtmenge an thermoplastischem Polyurethan.

Mit den genannten Mengenangaben ergeben sich besonders vorteilhafte Eigenschaften, insbesondere eine besonders hohe Verklebungsfestigkeiten der mit der Primerzusammensetzung hergestellten Klebeverbindung im verklebten Verbund.

Erfindungsgemäß enthält die Primerzusammensetzung (b) wenigstens ein Organosilan.

Bei dem Organosilan kann es sich prinzipiell um alle dem Fachmann bekannten Verbindung des Typs R-Si(R¹R²R³), handeln, wobei R für einen organischen Rest steht, der Heteroatome enthalten kann und R¹, R² und R³ für die übrigen Reste am Siliziumatom stehen, die bevorzugt ausgewählt sind aus Alkoxygruppen und Alkylgruppen. Die Reste R¹, R² und R³ können dabei unabhängig voneinander gleich oder verschieden sein.

Besonders bevorzugt sind R¹, R² und R³ Alkoxygruppen und wiederum bevorzugt ausgewählt aus Methoxy- und Ethoxygruppen.

Gemäß vorteilhafter Ausführungsformen der Erfindung ist das Organosilan (b) ausgewählt ist aus der Gruppe bestehend aus
Trialkoxysilylalkyl-Bernsteinsäureanhydriden,
Trialkoxyphenylsilanen,
(3-Mercaptopropyl)trialkoxysilanen,
(3-Aminopropyl)alkoxysilanen,
3-(2-Aminoethylamino)propyltrialkoxysilanen,
Vinyltrialkoxysilanen, und
(3-Glycidyloxypropyl)trialkoxysilanen.

Gemäß besonders vorteilhafter Ausführungsformen der Erfindung ist das Organosilan (b) ausgewählt ist aus der Gruppe bestehend aus
Trialkoxysilylalkyl-Bernsteinsäureanhydriden,
Trialkoxyphenylsilanen,
(3-Mercaptopropyl)trialkoxysilanen,
Vinyltrialkoxysilanen, und
(3-Glycidyloxypropyl)trialkoxysilanen.

Als (3-Glycidyloxypropyl)trialkoxysilan sind (3-Glycidyloxypropyl)trimethoxysilan und/oder (3-Glycidyloxypropyl)triethoxysilan bevorzugt.

Ganz besonders bevorzugt ist als Organosilan (b) wenigstens ein Trialkoxysilylalkyl-Bernsteinsäureanhydrid in der Primerzusammensetzung enthalten.

Überraschenderweise werden hierdurch eine verbesserte chemische Beständigkeit sowie sehr gute Verklebungsfestigkeiten vor und nach der Lagerung unter feucht-warmen Bedingungen erzielt.

Bevorzugt ist der Alkylteil des Trialkoxysilylalkyl-Bernsteinsäureanhydrids eine lineare Alkylen-Gruppe mit 1 bis 10 Kohlenstoffatomen, weiter bevorzugt 3 bis 8 Kohlenstoffatomen. Besonders bevorzugt ist eine Propylen-Gruppe. Damit handelt es sich bei dem Silan bevorzugt um ein Trialkoxysilylpropyl-Bernsteinsäureanhydrid. Bevorzugt sind die Trialkoxy-Gruppen innerhalb eines Moleküls gleich. Bevorzugt sind die Alkoxyl-Gruppen des Trialkoxysilylalkyl-Bernsteinsäureanhydrids ausgewählt aus Methoxy-Gruppe und Ethoxy-Gruppen.

Gemäß besonders vorteilhafter Ausführungsformen der Erfindung enthält der Primer (3-Triethoxysilylpropyl)-Bernsteinsäureanhydrid als Trialkoxysilylalkyl-Bernsteinsäureanhydrid und damit als Organosilan (b).

Gemäß vorteilhafter Ausführungsformen der Erfindung beträgt die Menge der enthaltenen Organosilane (b) in der ungetrockneten Primerzusammensetzung 0,5 bis 5,0 Gew.-%, bevorzugt 0,5 bis 3,0 Gew.-%, besonders bevorzugt 0,5 bis 1,5 Gew.-%, bezogen auf das Gesamtgewicht der ungetrockneten Primerzusammensetzung.

Gemäß vorteilhafter Ausführungsformen der Erfindung beträgt die Menge der enthaltenen Organosilane (b) in der getrockneten Primerzusammensetzung 10 bis 30 Gew.-%, bevorzugt 15 bis 30 Gew.-%, besonders bevorzugt 15 bis 25 Gew.-%, bezogen auf das Gesamtgewicht der getrockneten Primerzusammensetzung.

Gemäß vorteilhafter Ausführungsformen der Erfindung beträgt dabei das Mengenverhältnis der Gesamtmenge an thermoplastischem Polyurethan (a) zu der Gesamtmenge an Organosilanen (b), insbesondere (3-Triethoxysilylpropyl)-Bernsteinsäureanhydrid, von 3:1 bis 5:1, besonders bevorzugt 3,5:1 bis 4,5:1, ganz besonders bevorzugt 3,75:1 bis 4,25:1, insbesondere 4:1.

Organische Lösungsmittel und Wasser werden bei diesem Mengenverhältnis nicht mit einbezogen.

Eine besonders bevorzugte getrocknete verwendete Primerzusammensetzung enthält bezogen auf das Gesamtgewicht der getrockneten Primerzusammensetzung:
(a) 75 bis 85 Gew.-% wenigstens einen thermoplastischen Polyurethans
(b) 15 bis 25 Gew.-%wenigstens eines Organosilans.

Bevorzugt beträgt die Summe der Mengen der Bestandteile (a) und (b) 98 bis 100 Gew.-%, insbesondere 100 Gew.-%. Für den Fall, dass die Summe weniger als 100 Gew.-% beträgt, sind insbesondere nicht oder noch nicht verdampfte Mengen an Lösungsmittel enthalten.

Die Herstellung der Primerzusammensetzung erfolgt insbesondere dadurch, dass die genannten Bestandteile (a) und (b) zusammengegeben und miteinander vermischt werden. Dabei werden das thermoplastische Polyurethan und das Organosilan als voneinander getrennte Substanzen zusammengegeben. Insbesondere werden sie nicht vorher miteinander in Reaktion gebracht, sodass bei der Herstellung der erfindungsgemäßen Primerzusammensetzung insbesondere kein Silan-funktionalisiertes Polyurethan verwendet wird.

Die Bestandteile werden insbesondere in wenigstens einem organischen Lösungsmittel miteinander vermischt.

Unter "Lösungsmittel" werden im Rahmen der vorliegenden Erfindung andere Lösungsmittel als Wasser verstanden, insbesondere organische Lösungsmittel.

Die Primerzusammensetzung wird insbesondere und bevorzugt durch Zugabe von organischem Lösungsmittel auf einen gewünschten Feststoffgehalt, insbesondere im Hinblick auf eine gewünschte Viskosität eingestellt, sodass sie an die jeweiligen Bedingungen beim Auftragen zur Herstellung der Klebeverbindung des verklebten Verbundes angepasst ist. Gemäß bevorzugter Ausführungsformen beträgt die Gesamtmenge an organischen Lösungsmitteln 85 bis 98 Gew.-%, bevorzugt 93 bis 98 Gew.-%, insbesondere und beispielsweise 95 Gew.-%, bezogen auf das Gesamtgewicht der ungetrockneten Primerzusammensetzung.

Der Primerauftrag erfolgt bevorzugt manuell (z. B. durch Pinseln oder Sprühen) oder maschinell (z. B. durch Beschichten oder Bedrucken). Sofern der Primer Lösungsmittel und/oder Wasser enthält, wird anschließend getrocknet.

Aus dem Auftragen der Primerzusammensetzung auf eine Fläche, beispielsweise auf ein Substrat, insbesondere ein Bauteil, und/oder eine Klebemasse, resultiert somit insbesondere und bevorzugt eine zunächst ungetrocknete Primerschicht mit einer bestimmten Schichtdicke.

Bevorzugt wird der Primer mittels eines Druckers, einer Dosierdüse, eines Rakels, eines Pinsels oder eines geeigneten Stäbchens aufgetragen.

Gemäß vorteilhafter Ausführungsformen wird der Primer mit einer geführten Dosierdüse aufgetragen, z.B. "EV series automated dispensing systems" der Firma Nordson EFD. Gemäß weiterer vorteilhafter Ausführungsformen wird der Primer mit einem Drucker aufgetragen.

Bevorzugt wird der Primer in einer geschlossenen Fläche (vollflächig) auf dem Substrat und/oder dem Klebefilm oder auf der Trägerschicht und/oder dem Klebefilm aufgetragen. Alternativ bevorzugt wird der Primer in definierten oder beliebigen Abständen zueinander in einzelnen Bereichen, beispielsweise kreisförmig, aufgetragen.

Die Schichtdicke der Primerschicht wird laseroptisch (CLSM (Konvokales Laser Microskop, Fa. Keyence) bestimmt.

Vor dem Fügen einer weiteren Schicht auf diese Primerschicht erfolgt dann wie bereits beschrieben insbesondere und bevorzugt das Trocknen der Primerschicht, woraus eine getrocknete Primerschicht mit entsprechend reduzierter Schichtdicke resultiert.

Die Primerschicht P weist bevorzugt nach dem Trocknen eine Schichtdicke von 0,05 µm bis 50 µm, insbesondere 0,05 µm bis 10 µm, auf. Gemäß vorteilhafter Ausführungsformen weist die Primerschicht P nach dem Trocknen eine Schichtdicke von 0,5 bis 5 µm.

### Primerauftrag und Inkontaktbringung (Schritte v. und iv.)

Bei dem erfindungsgemäßen Verfahren erfolgt gemäß Schritt iv. die Inkontaktbringung einer Oberfläche des Substrats A mit einer ersten Oberfläche des Films D oder die Inkontaktbringung einer Oberfläche der Trägerschicht T mit einer ersten Oberfläche des Films D. Dies kann prinzipiell mit allen dem Fachmann bekannten Verfahren und unter Zuhilfenahme bekannter Vorrichtungen und Hilfsmittel durchgeführt werden. Durch diese Inkontaktbringung wird die Verklebungsfläche erzeugt, die den verklebten Verbund ausmacht.

Erfindungswesentlich ist jedoch, dass gemäß Schritt v. vor der Inkontaktbringung die Primerzusammensetzung aus Schritt iii. als Schicht P zwischen den zu kontaktierenden Oberflächen aufgebracht wird. Hierbei wird die Primerzusammensetzung entweder auf die erste Oberfläche des Films D und/oder die Oberfläche des Substrats A oder auf die erste Oberfläche des Films D und/oder die Oberfläche der Trägerschicht T aufgebracht werden. Die Primerzusammensetzung kann somit jeweils auf nur eine Oberfläche oder auf beide zu kontaktierenden Oberflächen aufgebracht werden.

Im Anschluss an den Primerauftrag erfolgt bevorzugt wie oben beschrieben die Trocknung der Primerschicht P, falls Lösungsmittel in der aufgetragenen Primerzusammensetzung enthalten sind. Je nach Schichtdicke kann das Trocknen vergleichsweise schnell erfolgen.

Ein weiterer Gegenstand der Erfindung ist ein verklebter Verbund, der durch das erfindungsgemäße Verfahren hergestellt ist.

Ein weiterer Gegenstand der Erfindung ist ein verklebter Verbund, der wenigstens die Schichten in der Reihenfolge A-P-D oder T-P-D wie vorstehend beschrieben umfasst. Bevorzugt weist der erfindungsgemäße verklebte Verbund die Schichten in der Reihenfolge A-P-D-P-B auf, wobei A und B elektrisch leitfähige Substrate sind.

Für den erfindungsgemäßen verklebten Verbund gelten sämtliche Ausführungen, insbesondere die zum erfindungsgemäßen Verfahren.

### Weitere Schichten des verklebten Verbundes

Der erfindungsgemäß erzielte Vorteil kommt bereits beim Verkleben eines Substrates oder einer Trägerschicht mit dem reaktiven hitzeaktivierbaren Klebefilm zum Tragen, da wie beschrieben die bestimmte Primerzusammensetzung in dieser Grenzfläche eine überraschende Wirkung hat.

Dabei kann der übrige Aufbau des verklebten Verbundes beliebige Formen haben und weitere Schichten aufweisen. Somit kann das Vor-Erzeugnis, was sich aus Schritt v. ergibt, vor der Aktivierung zum verklebten Verbund mit oder zur Erzeugung von verschiedenen Klebeband-Geometrien und mit weiteren Substraten kombiniert werden. Beispielsweise und bevorzugt kann die zweite Oberfläche des Films D mit einem Schutzliner versehen sein und diese Oberfläche zu einem späteren Zeitpunkt durch Aktivierung mit einer anderen Trägerschicht, einem anderen Substrat oder einer anderen Klebemasse verklebt werden.

Besonders bevorzugt werden beim Verfahren zur Herstellung des verklebten Verbundes zwei Substrate, Substrat A und Substrat B miteinander verklebt.

Gemäß bevorzugter Ausführungsformen der Erfindung ist der Film D dabei ein Transferklebeband, d.h. er weist bevorzugt keine weiteren Schichten auf, und das zweite Substrat B ebenfalls elektrisch leitfähig. Hierbei wird besonders bevorzugt auch zwischen der Oberfläche des zweiten Substrats B und der zweiten Oberfläche des Films D die definierte Primerzusammensetzung aufgebracht.

Somit umfasst das erfindungsgemäße Verfahren gemäß besonders bevorzugter Ausführungsformen wenigstens folgende Schritte:
i. Bereitstellung eines elektrisch leitfähigen Substrats A;
ii. Bereitstellung eines Films D aus einer reaktiven hitzeaktivierbaren Klebemasse, wobei die reaktive hitzeaktivierbare Klebemasse wenigstens einen Elektrolyten enthält;
iii. Bereitstellung einer Primerzusammensetzung, wobei die Primerzusammensetzung wenigstens folgende Bestandteile enthält:
   (a) wenigstens ein thermoplastisches Polyurethan; und
   (b) wenigstens ein Organosilan;
iv. Inkontaktbringung einer Oberfläche des ersten Substrats A mit einer ersten Oberfläche des Films D;
v. wobei vor der Inkontaktbringung gemäß Schritt iv. zwischen dem Substrat A und der ersten Oberfläche des Films D die Primerzusammensetzung aus Schritt iii. als Schicht P aufgebracht wird;
vi. Bereitstellung eines elektrisch leitfähigen Substrates B;
vii. Inkontaktbringung einer Oberfläche des Substrats B mit einer zweiten Oberfläche des Films D;
viii. wobei vor der Inkontaktbringung gemäß Schritt vii. zwischen dem Substrat B und der zweiten Oberfläche des Films D die Primerzusammensetzung aus Schritt iii. als Schicht P' aufgebracht wird;
x. Aktivierung des Films D durch Wärmezufuhr von 40 °C oder mehr und unter Anwendung eines Verpressdruckes von mehr als 1 bar.

Der somit hergestellte erfindungsgemäße verklebte Verbund weist die Schichten in der Reihenfolge A-P-D-P'-B auf.

Je nach Beschaffenheit des zweiten Substrates B, insbesondere wenn dieses vom Substrat A deutlich verschieden ist, kann auf die Primerschicht P' verzichtet werden, woraus sich die Ausführungsform A-P-D-B des erfindungsgemäßen Verbundes ergibt.

Der Schritt viii. im vorstehend genannten Verfahren ist somit optional.

Ferner ist es auch denkbar, dass in der vorstehend genannten Ausführungsform ein anderer Primer zwischen D und B aufgetragen wird.

Gemäß weiterer bevorzugter Ausführungsformen wird der Film D an der ersten Oberfläche mit einem elektrisch leitfähigen Substrat A und an der zweiten Oberfläche mit einer elektrisch leitfähigen Trägerschicht T' verklebt. Dies ermöglicht es später im verklebten Verbund an diese Trägerschicht T' eine Spannung anzulegen, was besonders vorteilhaft ist, wenn ein weiteres elektrisch nicht leitfähiges Substrat mit dem Substrat A verklebt werden soll.

Je nach Beschaffenheit des Trägers, gewünschter Verklebungsfestigkeit zwischen Film D und Trägerschicht sowie der chemischen Beständigkeit der Trägerschicht gegenüber dem Primer kann zwischen Film D und Trägerschicht T' ebenfalls der Primer aufgetragen werden.

Gemäß besonders bevorzugter Ausführungsformen wird auch zwischen der Oberfläche der elektrisch leitfähigen Trägerschicht T' und der zweiten Oberfläche des Films D die definierte Primerzusammensetzung aufgebracht.

Der somit hergestellte erfindungsgemäße verklebte Verbund weist die Schichten in der Reihenfolge A-P-D-P'-T' auf. Hiermit werden vorteilhafterweise höhere Verklebungsfestigkeiten Zwischen Film D und elektrisch leitfähiger Trägerschicht T' erzielt, beispielsweise und insbesondere im Fall von metallisierter Folie als Trägerschicht T'.

Wenn die Klebkraft der Klebemasse des Films D an die Trägerschicht T' jedoch ausreicht, dann ist auch der Aufbau ohne zweite Primerschicht P' und damit der Aufbau A-P-D-T' denkbar und bevorzugt.

Gemäß weiterer bevorzugter Ausführungsformen wird der Film D mit einer elektrisch leitfähigen Trägerschicht T verklebt. Ein derartiger verklebter Verbund ist flexibel einsetzbar und kann insbesondere zur Verklebung in weiteren beliebig aufgebauten verklebten Verbunden verwendet werden, insbesondere zur Verklebung eines elektrisch leitfähigen Substrates und eines elektrisch nicht leitfähigen Substrates. Erfindungsgemäß wird auch hier zwischen dem Film D und der elektrisch leitfähigen Trägerschicht T die definierte Primerzusammensetzung aufgebracht.

Somit umfasst das erfindungsgemäße Verfahren gemäß besonders bevorzugter Ausführungsformen wenigstens folgende Schritte:
i. Bereitstellung einer elektrisch leitfähigen Trägerschicht T;
ii. Bereitstellung eines Films D aus einer reaktiven hitzeaktivierbaren Klebemasse, wobei die reaktive hitzeaktivierbare Klebemasse wenigstens einen Elektrolyten enthält;
iii. Bereitstellung einer Primerzusammensetzung, wobei die Primerzusammensetzung wenigstens folgende Bestandteile enthält:
   (a) wenigstens ein thermoplastisches Polyurethan; und
   (b) wenigstens ein Organosilan;
iv. Inkontaktbringung einer Oberfläche der Trägerschicht T mit einer ersten Oberfläche des Films D;
v. wobei vor der Inkontaktbringung zwischen der Trägerschicht T und der ersten Oberfläche des Films D die Primerzusammensetzung aus Schritt iii. als Schicht P aufgebracht wird; und
x. Aktivierung des Films D durch Wärmezufuhr von 40 °C oder mehr und unter Anwendung eines Verpressdruckes von mehr als 1 bar.

Der somit hergestellte erfindungsgemäße verklebte Verbund weist die Schichten in der Reihenfolge T-P-D auf.

Gemäß weiterer bevorzugter Ausführungsformen wird der Verbund A-P-D-P'-T' oder A-P-D-T' vor oder nach der Hitzeaktivierung gemäß Schritt x. über die noch zur Verfügung stehende Oberfläche T' der Trägerschicht T' mit einem zweiten elektrisch leitfähigen Substrat B verklebt. Hierbei ist es bevorzugt, dass die Trägerschicht T' keine andere Schicht, insbesondere keine benachbarte Klebemasseschicht, überragt. Hierdurch kann der Verbund der Schichten auf einfache Weise gemeinsam verarbeitet, insbesondere gestanzt oder auf sonstige Weise in die gewünschte Form gebracht werden. Ein derartiger Aufbau hat somit den Vorteil, dass eine einfache Herstellbarkeit gegeben ist und zudem durch die Trägerschicht(en) die Stabilität des Klebebandes eingestellt werden kann. Die Spannung kann dann insbesondere an die beiden elektrisch leitfähigen Substrate A und B angelegt werden.

Hierbei kann die Klebemasseschicht zwischen T' und B ebenfalls ein reaktiver hitzeaktvierbarer Film D' - enthaltend wenigstens einen Elektrolyten - sein oder eine reaktive hitzeaktivierbare Klebemasseschicht C, die keinen Elektrolyten enthält und auf andere Weise, beispielsweise durch Metallpartikel, elektrisch leitfähig ausgestaltet ist. Ausführungsformen für elektrisch leitfähige Klebemasseschichten C sind unten in der Beschreibung angeführt.

Ferner kann die Klebemasseschicht C auf einer nicht über Hitze aktivierbaren elektrisch leitfähigen Klebemasse basieren, wie beispielsweise auf einer reaktiven, über UV- oder sichtbares Licht bei geringen Temperaturen aushärtbare Klebemasse, oder beispielsweise eine Haftklebemasse sein.

Beispielsweise und bevorzugt wird zunächst ein verklebter Verbund A-P-D-P'-T' oder A-P-D-T' durch Hitzeaktivierung hergestellt. Separat davon wird ein Verbund aus C-B erzeugt. Durch Inkontaktbringen von T' und C und ggf. anschließender Aktivierung der Klebemasse C, wie beispielsweise durch UV, wird der Verbund A-P-D-P'-T'-C-B oder A-P-D-T'-C-B erzeugt.

Gemäß weiterer bevorzugter Ausführungsformen wird als Klebemasse zwischen T' und B ebenfalls ein reaktiver hitzeaktivierbarer Film D' verwendet. Die Zusammensetzung von D' kann dabei insbesondere und bevorzugt die gleiche sein wie die von Film D.

Auch bei den vorstehend genannten Ausführungsformen kann der Primer zwischen T' und D' und/oder zwischen D' und B oder zwischen T' und C und/oder zwischen C und B aufgetragen werden, um die Verklebungsfestigkeiten an diesen Schnittstellen einzustellen.

Bevorzugt wird der Primer jeweils zwischen den Substraten A/B und dem jeweiligen Klebefilm D/D' aufgetragen, woraus sich beispielsweise und bevorzugt der Aufbau A-P-D-T'-D'-P'-B ergibt.

Zusammenfassend sind auch solche Ausführungsformen bevorzugt, bei denen zwei elektrisch leitfähige Substrate A und B über ein erfindungsgemäßes Klebeband-System miteinander verklebt sind, wobei das Klebeband-System zusätzlich wenigstens eine elektrisch leitfähige Trägerschicht aufweist und der beschriebene Primer erfindungsgemäß zwischen wenigstens einer Oberfläche des Klebefilms D und der benachbarten Schicht aufgebracht ist.

Das erfindungsgemäße Verfahren zur Herstellung des verklebten Verbundes umfasst somit gemäß bevorzugter Ausführungsformen die zusätzlichen Verfahrensschritte, die sich aus der Kombination mit den weiteren genannten Schichten je nach Art und Ausführungsform ergeben. Das erfindungsgemäße Verfahren zur Herstellung des verklebten Verbundes A-P-D-T'-D'-P'-B umfasst daher ausgehend von der Herstellung von A-P-D-T' zeitlich vor der Aktivierung beispielsweise zusätzlich die Schritte: Bereitstellung eines zweiten reaktiven hitzeaktivierbaren Klebefilms D' enthaltend wenigstens einen Elektrolyten, Bereitstellung eines zweiten elektrisch leitfähigen Substrates B, Aufbringen der Primerzusammensetzung zwischen D' und B zur Erzeugung der zweiten Primerschicht P'. Anschließend erfolgt die Aktivierung des gesamten Verbundes gemäß Schritt x.

Gemäß weiterer bevorzugter Ausführungsformen wird der Film D zwischen einer ersten elektrisch leitfähigen Trägerschicht T und einer zweiten elektrisch leitfähigen Trägerschicht T' angeordnet.

Je nach Beschaffenheit des Trägers, gewünschter Verklebungsfestigkeit zwischen Film D und Trägerschicht T' sowie der chemischen Beständigkeit der Trägerschicht T' gegenüber dem Primer kann zwischen Film D und Trägerschicht T' ebenfalls der Primer aufgetragen werden.

Gemäß besonders bevorzugter Ausführungsformen wird auch zwischen der Oberfläche der elektrisch leitfähigen Trägerschicht T' und der zweiten Oberfläche des Films D die definierte Primerzusammensetzung aufgebracht.

Der somit hergestellte erfindungsgemäße verklebte Verbund weist die Schichten in der Reihenfolge T-P-D-P'-T' auf. Hiermit werden vorteilhafterweise höhere Verklebungsfestigkeiten zwischen Film D und elektrisch leitfähiger Trägerschicht T' erzielt, beispielsweise und insbesondere im Fall von metallisierter Folie als Trägerschicht T'.

Wenn die Klebkraft der Klebemasse des Films D an die Trägerschicht T' jedoch ausreicht, dann ist auch der Aufbau ohne zweite Primerschicht P' und damit der Aufbau T-P-D-T' denkbar und bevorzugt.

Ein derartiger verklebter Verbund, insbesondere in den Ausführungsformen T-P-D-P'-T' oder T-P-D-T' ist flexibel einsetzbar und kann insbesondere zur Verklebung von zwei elektrisch nicht leitfähigen Substraten verwendet werden.

Somit umfasst das erfindungsgemäße Verfahren gemäß bevorzugter Ausführungsformen wenigstens folgende Schritte:
i. Bereitstellung einer elektrisch leitfähigen Trägerschicht T;
ii. Bereitstellung eines Films D aus einer reaktiven hitzeaktivierbaren Klebemasse, wobei die reaktive hitzeaktivierbare Klebemasse wenigstens einen Elektrolyten enthält;
iii. Bereitstellung einer Primerzusammensetzung, wobei die Primerzusammensetzung wenigstens folgende Bestandteile enthält:
   (a) wenigstens ein thermoplastisches Polyurethan; und
   (b) wenigstens ein Organosilan;
iv. Inkontaktbringung einer Oberfläche der Trägerschicht T mit einer ersten Oberfläche des Films D;
v. wobei vor der Inkontaktbringung zwischen der Trägerschicht T und der ersten Oberfläche des Films D die Primerzusammensetzung aus Schritt iii. als Schicht P aufgebracht wird; und
vi. Bereitstellung einer elektrisch leitfähigen Trägerschicht T';
vii. Inkontaktbringung einer Oberfläche der Trägerschicht T' mit einer zweiten Oberfläche des Films D;
viii. wobei optional vor der Inkontaktbringung gemäß Schritt vii. zwischen der Trägerschicht T' und der zweiten Oberfläche des Films D die Primerzusammensetzung aus Schritt iii. als Schicht P' aufgebracht wird;
x. Aktivierung des Films D durch Wärmezufuhr von 40 °C oder mehr und unter Anwendung eines Verpressdruckes von mehr als 1 bar.

Der somit hergestellte erfindungsgemäße verklebte Verbund weist die Schichten in der Reihenfolge T-P-D-P-T' auf.

Für den Fall, dass nach analogem Verfahren ein erfindungsgemäßer verklebter Verbund mit der Schichtreihenfolge T-P-D-P'-B (oder T-P-D-B) mit B als elektrisch leitfähigem Substrat erzeugt wird entspricht dies dem Fall A-P-D-P'-T' (oder A-D-P'-T'). Daher wird diese erfindungsgemäße Ausführungsform nicht näher ausgeführt.

Zusammengefasst umfasst das erfindungsgemäße Verfahren zur Herstellung des erfindungsgemäßen verklebten Verbundes in bevorzugten Ausführungsformen wenigstens folgende Verfahrensschritte:
i. Bereitstellung eines elektrisch leitfähigen Substrats A oder einer elektrisch leitfähigen Trägerschicht T;
ii. Bereitstellung eines Films D aus einer reaktiven hitzeaktivierbaren Klebemasse, wobei die reaktive hitzeaktivierbare Klebemasse wenigstens einen Elektrolyten enthält;
iii. Bereitstellung einer Primerzusammensetzung, wobei die Primerzusammensetzung wenigstens folgende Bestandteile enthält:
   (a) wenigstens ein thermoplastisches Polyurethan; und
   (b) wenigstens ein Organosilan;
iv. Inkontaktbringung einer Oberfläche des ersten Substrats A oder einer Oberfläche der Trägerschicht T mit einer ersten Oberfläche des Films D;
v. wobei vor der Inkontaktbringung gemäß Schritt iv. zwischen dem Substrat A und der ersten Oberfläche des Films D oder der Trägerschicht T und der ersten Oberfläche des Films D die Primerzusammensetzung aus Schritt iii. als Schicht P aufgebracht wird;
vi. Bereitstellung eines elektrisch leitfähigen Substrates B oder einer elektrisch leitfähigen Trägerschicht T';
vii. Inkontaktbringung einer Oberfläche des Substrats B oder einer Oberfläche der Trägerschicht T' mit einer zweiten Oberfläche des Films D;
viii. wobei optional vor der Inkontaktbringung gemäß Schritt vii. zwischen dem Substrat B und der zweiten Oberfläche des Films D oder der Trägerschicht T' und der zweiten Oberfläche des Films D die Primerzusammensetzung aus Schritt iii. als Schicht P' aufgebracht wird;
x. Aktivierung des Films D durch Wärmezufuhr von 40 °C oder mehr und unter Anwendung eines Verpressdruckes von mehr als 1 bar.

Für die einzelnen Schritte und Merkmale sämtlicher Ausführungsformen des Verfahrens gelten sämtliche obige Ausführungen inklusive sämtlicher Bevorzugungsstufen und Ausführungsformen unmittelbar (Schritte i. bis v. und x.) oder analog (Schritte vi. bis viii.).

Die zeitliche Reihenfolge der Schritte i. bis iii. ist beliebig.

Die zeitliche Reihenfolge der Schritte iv. und v. ergibt sich aus dem Wortlaut.

Die Aktivierung gemäß Schritt x. erfolgt im Anschluss an die vorherigen Schritte.

Für den Fall, dass im Gesamtaufbau des Klebebandes im verklebten Verbund eine Trägerschicht T und/oder T' enthalten ist, und daran auf der dem Film D gegenüberliegenden Seite jeweils ein Substrat verklebt ist, ist bevorzugt zwischen der Trägerschicht T bzw. T' und dem Substrat eine weitere Klebemasseschicht C bzw. gegebenenfalls eine zweite weitere Klebemasseschicht C' angeordnet.

Ein derartiger Verbund kann beispielsweise den Aufbau S-C-T-P-D-P-T'-C'-S', mit S und S' gleich elektrisch nicht leitfähigen Substraten, aufweisen.

Die Trägerschichten T sowie T und T' sämtlicher vorstehend genannter Ausführungsformen sind elektrisch leitfähig.

Im Folgenden werden diese Schichten weiter ausgeführt. Der Einfachheit halber wird der Begriff "elektrisch leitfähige Trägerschicht" oder auch nur "Trägerschicht" verwendet. Dieser bezieht sich je nach den obigen Ausführungsformen auf die Trägerschicht T oder die Trägerschichten T und T'.

Die Trägerschichten T und T' sind unabhängig voneinander und können gleich oder verschieden voneinander ausgeführt sein. Bevorzugt umfasst die elektrisch leitfähige Trägerschicht wenigstens ein Metall. Gemäß bevorzugter Ausführungsformen der Erfindung ist das Metall ausgewählt aus der Gruppe bestehend aus Kupfer, Nickel, Zink, Zinn, Silber, Gold, Aluminium, Eisen, Chrom und Legierungen dieser genannten Metalle. Ganz besonders bevorzugt ist das Metall ausgewählt aus der Gruppe bestehend aus Aluminium, Zinn, Chrom-Nickel, Nickel-Eisen. Sehr bevorzugt ist Zinn.

Bevorzugt weist die elektrisch leitfähige Trägerschicht eine Schichtdicke, gemessen in z-Richtung, also parallel zur Stapelrichtung der Schichtanordnung, von 10 nm (Nanometer) bis 50 µm (Mikrometer) auf.

Die elektrisch leitfähige Trägerschicht weist gemäß bevorzugter Ausführungsformen der Erfindung a) wenigstens eine Metallfolie, beispielsweise eine Aluminiumfolie oder Nickel-Eisen-Folie, und/oder b) wenigstens ein elektrisch leitfähiges Textil aufweisend wenigstens ein Metall, bevorzugt ausgewählt aus der Gruppe bestehend aus Kupfer und Nickel, und/oder c) eine oder mehrere Lagen wenigstens eines aufgetragenen Metalls, bevorzugt ausgewählt aus der Gruppe bestehend aus Kupfer, Zinn und Aluminium, und/oder d) wenigstens ein Gitter aus Metall und/oder e) eine metallisierte Folie und damit eine Folie, die mit Metall beschichtet ist, wobei das Metall bevorzugt ausgewählt ist aus der Gruppe bestehend aus Aluminium, Zinn, Chrom-Nickel und Nickel-Eisen.

Es ist dabei prinzipiell auch denkbar, dass die Schicht T eine Kombination von zwei oder mehreren der genannten Möglichkeiten aufweist.

Metallfolien, wie beispielsweise Aluminiumfolien oder Nickel-Eisen-Folien, sind dem Fachmann bekannt. Bevorzugt weist die Metallfolie eine Schichtdicke, gemessen in z-Richtung, also parallel zur Stapelrichtung der Schichtanordnung, von 5 bis 50 µm, besonders bevorzugt von 10 bis 30 µm auf.

Elektrisch leitfähige Textilien sind dem Fachmann bekannt, insbesondere unter dem englischen Ausdruck "conductive mesh". Hierbei handelt es sich um ein textiles Gewebe, zum Beispiel aus PET (Polyethylenterephthalat), welches mit einem Metall, zum Beispiel mit Kupfer und/oder Nickel, beschichtet ist, wodurch die elektrische Leitfähigkeit des Gewebes hergestellt ist.

Dem Fachmann ist ebenfalls bekannt, dass Metalle direkt als Monolage oder Mehrfachlage auf Flächen, wie hier die Oberfläche einer Klebemasseschicht aufgetragen, wie beispielsweise aufgedampft, werden können. Im Rahmen der vorliegenden Erfindung kann die elektrisch leitfähige Trägerschicht durch Aufdampfen von Metall auf den Film D oder die Klebemasseschicht C oder die Klebemasseschicht C' bereitgestellt werden.

Im Fall von aufgetragenem Metall als Trägerschicht ist es gemäß vorteilhafter Ausführungsformen bevorzugt, dass diese Trägerschicht nur eine benachbarte Klebemasseschicht in wenigstens einer Erstreckungsrichtung der Schichtebene seitlich überragt und die jeweils andere Klebemasseschicht als mechanische Stütze dieser Metallschicht dient. Hierbei hat die Metallschicht keine eigentliche Trägerfunktion. Stattdessen fungiert die andere Klebemasseschicht als Träger für die Metallschicht. Der Einfachheit halber wird der Begriff Trägerschicht für die Metallschicht aber auch in diesen Ausführungsformen beibehalten. Bevorzugt beträgt die Schichtdicke der Schicht T in diesem Fall größer oder gleich 10 nm (Nanometer), bevorzugt 50 bis 200 nm.

Es ist aber auch denkbar und bevorzugt, dass keine der Schichten eine andere Schicht überragt. Hierdurch kann der Verbund der Schichten auf einfache Weise gemeinsam verarbeitet, insbesondere gestanzt oder auf sonstige Weise in die gewünschte Form gebracht werden. Denkbar und bevorzugt ist hierbei auch, dass zwei elektrisch leitfähige Substrate A und B verklebt werden und die Spannung an diese Substrate angelegt wird.

Ferner sind dem Fachmann Gitter aus Metall unterschiedlicher Dimensionen bekannt. Metallgitter mit geeigneten Schichtdicken können beispielsweise durch ein Gelege aus entsprechend dünnen Metallfäden oder durch Stanzen wenigstens einer Folie entsprechender Schichtdicke hergestellt sein.

Bei einer mit Metall beschichteten Folie wird insbesondere eine elektrisch nicht leitfähige Folie mit Metall beschichtet, um diese elektrisch leitfähig auszubilden. Das Metall ist bevorzugt ausgewählt aus der Gruppe bestehend aus Kupfer, Nickel, Zink, Zinn, Silber, Gold, Aluminium, Eisen, Chrom und Legierungen dieser genannten Metalle, wobei Aluminium, Zinn, Chrom-Nickel und Nickel-Eisen besonders bevorzugt sind. Das Material der Folie kann prinzipiell ausgewählt sein aus sämtlichen Materialien, die dazu geeignet sind mit Metall bedampft zu werden und als Trägerfolie in Klebebändern verwendet zu werden, wobei insbesondere Polymere geeignet sind. Das Material ist insbesondere ausgewählt aus Polyestern und Polyolefinen, wobei auch eine Mischung mehrerer Materialien denkbar ist. Als Polyester sind insbesondere Polyethylenterephthalat (PET) und Polyethylennaphthalat (PEN) bevorzugt. Als Polyolefine sind insbesondere Polypropylen (PP), Polyethylen (PE) bevorzugt. Gemäß bevorzugter Ausführungsformen ist das Material der Folie ausgewählt aus der Gruppe bestehend aus PET, PEN, PE, PP. Bevorzugt handelt es sich um eine Folie aus PET (Polyethylenterephthalat). Eine derartige Folie ist dimensionsstabil und somit gut verarbeitbar, ohne sich signifikant zu dehnen oder zu zerreißen. Hierdurch ist es möglich eine homogene und lückenlose Metallschicht dauerhaft aufzubringen, sodass die elektrische Leitfähigkeit, insbesondere in z-Richtung, über die gesamte Folie dauerhaft gewährleistet ist. Das Beschichten der Folie mit Metall kann auf jede dem Fachmann bekannte Weise erfolgen.

In den Ausführungsformen, in denen wenigstens eine elektrisch leitfähige Trägerschicht T oder wenigstens zwei elektrisch leitfähige Trägerschichten T und T' vorhanden sind, ist es gemäß vorteilhafter Ausführungsformen bevorzugt, dass diese wenigstens eine benachbarte Klebemasseschicht in wenigstens einer Erstreckungsrichtung der Schichtebene seitlich überragen und somit einen seitlichen Überstand aufweisen. An diesen seitlichen Überstand kann dann auf einfache Weise eine Spannung angelegt werden.

Gemäß weiterer vorteilhafter Ausführungsformen ist es aber auch denkbar und bevorzugt, dass keine der Trägerschichten eine andere Schicht, insbesondere benachbarte Klebemasseschicht, überragt. Hierdurch kann der Verbund der Schichten auf einfache Weise gemeinsam verarbeitet, insbesondere gestanzt oder auf sonstige Weise in die gewünschte Form gebracht werden. Ein derartiger Aufbau hat somit den Vorteil, dass eine einfache Herstellbarkeit gegeben ist und zudem durch die Trägerschicht(en) die Stabilität des Klebebandes eingestellt werden kann. Denkbar und bevorzugt ist hierbei auch, dass zwei elektrisch leitfähige Substrate A und B verklebt werden und die Spannung an diese Substrate angelegt wird. Die elektrisch leitfähige Trägerschicht ist in diesem Fall eine in z-Richtung durchgehend leitfähige Schicht, insbesondere und bevorzugt eine Metallfolie gemäß obiger Option a)

Unter dem Ausdruck "seitlich überragen" ist im Rahmen der vorliegenden Erfindung jegliche Art von seitlichem Überstand der angesprochenen Schicht oder Schichten gemeint und bedeutet, dass sich die jeweils angesprochene Schicht insbesondere in der "xy"-Ebene und somit seitlich - senkrecht zur Stapelrichtung - weiter erstreckt als die Bezugsschicht. Anstelle des Begriffes "seitlicher Überstand" werden im Rahmen der vorliegenden Erfindung auch die Begriffe "seitliche Verlängerung" oder "seitlicher Verlängerungsabschnitt" verwendet.

Der Begriff "seitlich" ist hier auf jede Erstreckungsrichtung der Schichtebene "xy" senkrecht zur Stapelrichtung der Schichten "z" bezogen. Der Begriff ist damit insbesondere unabhängig von der geometrischen Form des Klebebandes in der "xy"-Ebene, welche zum Beispiel ein Rechteck, wie für Klebebänder üblich (s. oben), aber auch ein Quadrat oder ein Kreis sein kann. Geringfügige Schwankungen der Maße der einzelnen Schichten in der "xy"-Ebene, die sich aufgrund des Stanzverfahrens oder ähnlichen formgebenden Verfahren ergeben, sind hiermit nicht angesprochen, insbesondere da solche geringfügigen Materialüberstände aufgrund der Dimensionen nicht dazu geeignet sind, planmäßig eine Spannung daran anzulegen.

Die Klebemasseschichten C bzw. C und C' können prinzipiell auf den gleichen Massen basieren wie die Klebemasseschicht D, wobei die Klebemassen der Schichten C bzw. C und C' keine Elektrolyten enthalten müssen, aber können. Bevorzugt enthalten die Schichten C bzw. C und C' keine Elektrolyten.

Unabhängig davon können die Klebemassen der Schichten C bzw. C und C' elektrisch leitfähig ausgestaltet sein, sodass auch hieran je nach übrigem Aufbau eine Spannung angelegt werden kann. Bevorzugt enthält die elektrisch leitfähige Klebemasseschicht hierzu wenigstens ein Metall, wie insbesondere Nickel, Kupfer, Silber, bevorzugt in Form von elektrisch leitfähigen Metallpartikeln und/oder metallisierten Partikeln, besonders bevorzugt Metallpartikeln. Metallpartikel können in beliebigen geeigneten Formen vorliegen, darunter auch als dendritische Metallpartikel.

Metallisierte Partikel sind insbesondere und bevorzugt Glas- oder Polymerpartikel, die mit wenigstens einem Metall metallisiert sind, sodass die zuvor elektrisch nicht leitfähigen Partikel durch die Metallisierung elektrisch leitfähig ausgestaltet sind. Besonders bevorzugt enthält die elektrisch leitfähige Klebemasseschicht elektrisch leitfähige Partikel, die ausgewählt sind aus der Gruppe bestehend aus Nickelpartikeln, Kupferpartikeln und versilberten Kupferpartikeln. Gemäß besonders bevorzugter Ausführungsformen enthält die elektrisch leitfähige Klebemasseschicht Nickelpartikel.

Bevorzugt enthält die elektrisch leitfähige Klebemasseschicht 5 bis 40 Gewichtsteile, besonders bevorzugt 20 bis 40 Gewichtsteile, ganz besonders bevorzugt 25 bis 35 Gewichtsteile, an elektrisch leitfähigen Partikeln, insbesondere Metallpartikeln und/oder metallisierten Partikeln, bezogen auf 100 Gewichtsteile an enthaltenen Polymeren.

Eine Schicht gilt im Rahmen der vorliegenden Erfindung insbesondere dann als "elektrisch leitfähig", wenn der Widerstand kleiner als 1 Ohm ist, gemessen in der jeweiligen Richtung, hier insbesondere in z-Richtung, nach dem Standard MIL-DTL-83528C: 2001-01.

Sämtliche elektrisch leitfähigen Schichten sind im Rahmen dieser Erfindung wenigstens in z-Richtung elektrisch leitfähig. Insbesondere die Schichten, an die eine Spannung angelegt wird, weisen zudem eine elektrische Leitfähigkeit in der x,y-Ebene, senkrecht zur z-Richtung auf.

Im Fall einer (C) oder zweier (C und C') elektrisch leitfähiger Klebemasseschichten muss die jeweilige Trägerschicht T bzw. T und/oder T' je nach Geometrie und an welcher Stelle die adhäsive Spaltung gewünscht ist, nicht elektrisch leitfähig sein. Die elektrische Leitfähigkeit muss somit nur zwischen den Schichten ermöglicht sein, zwischen denen die Spannung angelegt wird.

Unabhängig davon, ob die Klebemasseschichten C bzw. C und/oder C' elektrisch leitfähig ausgestaltet sind gelten folgende Ausführungen. Bei den weiteren Klebemasseschichten C bzw. C und/oder C' kann es sich um eine Schicht auf Basis einer reaktiven hitzeaktivierbaren Klebemasse handeln, die von der vorstehend beschriebenen Klebemasse des Films D gleich oder verschieden sein kann. Die Klebemasse der weiteren Klebemasseschicht C bzw. C und/oder C' kann aber auch eine durch eine andere Art der Aktivierung aktivierbare Klebemasse sein, wie beispielsweise ein strukturelle Klebemasse, die durch UV-Licht aktivierbar ist. Ferner kann die Klebemasse der weiteren Schicht C eine Haftklebemasse sein.

Die Klebemasse der Klebemasseschicht D und je nach Ausführungsform weitere Klebemassen werden mittels bekannter Verfahren hergestellt und in Schichtform gebracht, insbesondere durch Ausstreichen. Ferner können ggf. einer oder mehrere Trocknungsschritte erfolgen.

Das Laminieren sämtlicher beschriebener Schichten aufeinander erfolgt auf dem Fachmann bekannte Weise.

Vorteilhaft können die äußeren, frei liegenden Flächen der Klebemasseschichten des erfindungsgemäßen Klebebandes mit antiadhäsiven Materialien ausgerüstet sein wie mit einem Trennpapier oder einer Trennfolie, auch Liner oder Schutzliner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert, ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Die Dicke der einzelnen Klebemasseschicht(en) inklusive des Films D (in z-Richtung) beträgt bevorzugt von 10 bis 300 µm, besonders bevorzugt 15 bis 150 µm, ganz besonders bevorzugt von 20 bis 100 µm, ganz besonders bevorzugt von 25 bis 70 µm.

Ein weiterer Gegenstand der vorliegenden Erfindung ist ein Verfahren zum elektrischen Lösen des erfindungsgemäßen Verbundes, umfassend wenigstens folgende Verfahrensschritte:
i.) Anlegen einer Spannung an zwei verschiedenen elektrisch leitfähigen Stellen des Verbundes, wobei die Spannung bevorzugt von 1 bis 50 V beträgt.

Das Anlegen der Spannung erfolgt gemäß Schritt i.) des erfindungsgemäßen Verfahrens zum elektrischen Lösen des Verbundes.

Je nachdem, welchen Aufbau der verklebte Verbund hat, erfolgt das Anlegen der Spannung an den jeweils verfügbaren elektrisch leitfähigen Schichten.

Im Fall des beschriebenen Verbundes A-P-D-P'-B oder A-P-D-B umfassend die elektrisch leitfähigen Substrate A und B wird die Spannung an diese beiden Substrate A und B angelegt. Im Fall des beschriebenen Verbundes A-P-D-T'-D'-P'-B umfassend die elektrisch leitfähigen Substrate A und B wird die Spannung an diese beiden Substrate A und B angelegt.

Im Fall des beschriebenen Verbundes A-P-D-P'-T' (oder T-P-D-P'-B) umfassend ein elektrisch leitfähiges Substrat A (oder B) und eine elektrisch leitfähige Trägerschicht T' (oder T) wird die Spannung bevorzugt an A und T' oder B und T angelegt.

Im Fall des beschriebenen Verbundes T-P-D-P-T' umfassend die zwei elektrisch leitfähigen Trägerschichten T und T', mit dem insbesondere zwei elektrisch nicht leitfähige Substrate S und S' zu beispielsweise S-C-T-P-D-P-T'-C'-S' verklebt sind,

erfolgt das Anlegen der Spannung die beiden Trägerschichten T und T'.

Zusammengefasst umfasst das Verfahren zum elektrischen Lösen des Verbundes gemäß der vorstehenden Ausführungsformen wenigstens folgende Verfahrensschritte:
i) Anlegen einer Spannung an zwei verschiedenen elektrisch leitfähigen Stellen des Verbundes, wobei die Spannung bevorzugt von 1 bis 50 V, besonders bevorzugt 2 bis 50 V, beträgt,
   wobei
   die Spannung entweder an das elektrisch leitfähige Substrat A und das elektrisch leitfähige Substrat B oder
   an das elektrisch leitfähige Substrat A und die elektrisch leitfähige Trägerschicht T' oder an die elektrisch leitfähige Trägerschicht T und das elektrisch leitfähige Substrat B oder an die elektrisch leitfähige Trägerschicht T und die elektrisch leitfähige Trägerschicht T' angelegt wird.

Bei der Spannung handelt es sich insbesondere um eine Gleichspannung. Besonders bevorzugt beträgt die Spannung von 2 bis 50 V.

Gemäß vorteilhafter Ausführungsformen beträgt die Spannung 2 bis 12 V, beispielsweise 9 V.

Eine derartige Spannung kann insbesondere dadurch angelegt werden, dass eine in der unmittelbaren Nachbarschaft der Verklebung befindliche Batterie verwendet wird, wie insbesondere und beispielsweise in einem Mobiltelefon, Tablet etc. oder eine Batterie von außen hinzugefügt wird.

Gemäß weiterer bevorzugter Ausführungsformen der Erfindung beträgt die Spannung von 12 bis 50 V, beispielsweise 30 V. Durch diese vergleichsweise hohe Spannung kann das Wiederablösen besonders schnell erfolgen; die Spannung muss dabei nur für wenige Sekunden angelegt werden.

Die zeitliche Dauer des Anlegens der Spannung in Schritt i.) kann, insbesondere in Abhängigkeit der gewählten Spannung, von wenigen Sekunden, insbesondere 2 Sekunden, bis zu 900 Sekunden, bevorzugt bis zu 600 Sekunden, betragen. Natürlich ist es auch denkbar, dass die Spannung für einen längeren Zeitraum als 900 Sekunden angelegt wird, insbesondere, wenn die Spannung vergleichsweise niedrig ist.

Durch das erfindungsgemäße Verfahren zum elektrischen Lösen des erfindungsgemäßen Verbundes lassen sich beispielsweise die Substrate A und B auf schnelle und einfache Weise voneinander lösen, ohne dass ein allzu großer Kraftaufwand erforderlich ist. Ferner verbleiben auf wenigstens einem Substrat keine Rückstände des Klebefilms D.

Teilweise kann sich, insbesondere nach längeren Trennverfahren, auf dem abgelösten Substrat ein dünner Restfilm der verwendeten Elektrolyten, insbesondere ionischen Flüssigkeiten, befinden. Dieser ist jedoch auf einfache Weise entfernbar, wie beispielsweise durch Spülen mit einem geeigneten Lösungsmittel.

Das elektrisch leitfähige Substrat sämtlicher Ausführungsformen kann beispielsweise ein Gehäuse aus Metall, beispielsweise aus Aluminium oder passiviertem Aluminium oder Stahl, von einem Mobiltelefon sein. Ferner kann es sich beispielsweise um ein elektrisch leitfähiges Coating, was ein organisches oder anorganisches Coating sein kann, auf einem ansonsten elektrisch nicht leitfähigen Substrat oder ein auf sonstige Weise elektrisch leitfähig ausgerüstetes Substrat handeln.

Bei dem elektrisch nicht leitfähigen Substrat sämtlicher Ausführungsformen kann es sich insbesondere um ein Gehäuse aus einem nicht leitfähigen Material, wie Plastik, oder eine Batterie oder andere nicht elektrisch leitfähig ausgestaltete Bauteile handeln, wie beispielsweise Lautsprecher.

Wie bereits ausgeführt ist die Erfindung insbesondere zur Verklebung von temperaturempfindlichen Substraten, wie beispielsweise anodisiertes Aluminium, Polymere, Displays und/oder Glas, geeignet.

Ein weiterer Gegenstand der vorliegenden Erfindung ist die Verwendung des erfindungsgemäßen Klebebands zur Verklebung von Bauteilen in elektronischen Geräten, Automobilen, medizinischen Geräten und zahnmedizinischen Geräten sowie im handwerklichen Bereich und im Haushalt. Mögliche Verwendungen umfassen dabei auch sogenannte DIY-Anwendungen ("do it yourself").

Bevorzugt ist die die Verwendung des erfindungsgemäßen Klebebands zur Verklebung von Bauteilen in elektronischen Geräten, Automobilen, medizinischen Geräten und zahnmedizinischen Geräten.

Nachfolgend werden bevorzugte Ausführungsformen der Erfindung unter Bezugnahme auf die beiliegenden Figuren näher erläutert und beschrieben. Dabei zeigen:
Fig. 1 eine vereinfachte schematische Querschnittsdarstellung durch einen erfindungsgemäßen verklebten Verbund in einer bevorzugten Ausführungsform; und
Fig. 2 eine vereinfachte schematische Querschnittsdarstellung durch einen erfindungsgemäßen verklebten Verbund in einer bevorzugten Ausführungsform; und
Fig. 3 eine vereinfachte schematische Querschnittsdarstellung durch einen erfindungsgemäßen verklebten Verbund, an den eine Spannung angelegt ist, in einer bevorzugten Ausführungsform; und
Fig. 4 eine vereinfachte schematische Querschnittsdarstellung durch einen erfindungsgemäßen verklebten Verbund, nachdem eine Spannung angelegt wurde und hierdurch eine adhäsive Spaltung erfolgt ist; und
Fig. 5 eine vereinfachte schematische Querschnittsdarstellung durch einen erfindungsgemäßen verklebten Verbund in einer bevorzugten Ausführungsform.

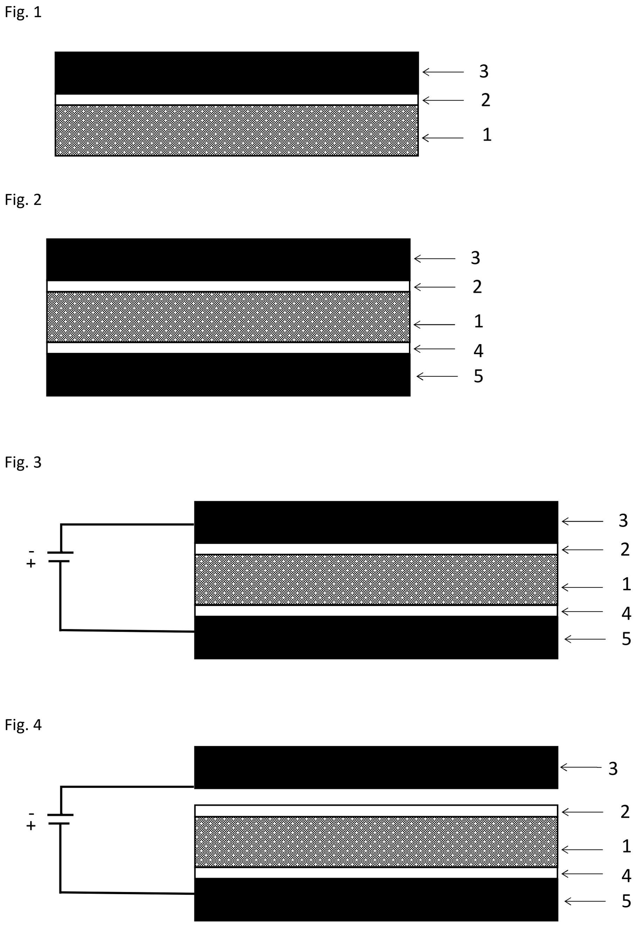

In Fig. 1 ist eine schematische Darstellung des erfindungsgemäßen verklebten Verbundes in einer bevorzugten Ausführungsform abgebildet. Wie anhand von Fig. 1 erkennbar, ist der Film D 1 mit einer ersten Oberfläche mit einer Fläche des ersten Substrates A 3 verbunden, wobei zwischen Film D 1 und Substrat A 3 die Primerschicht P 2 aufgebracht ist.

In Fig. 2 ist eine schematische Darstellung des erfindungsgemäßen verklebten Verbundes in einer bevorzugten Ausführungsform abgebildet. Wie anhand von Fig. 2 erkennbar, ist der Film D 1 an einer ersten Oberfläche mit einer Fläche des ersten Substrates A 3 verbunden, wobei zwischen Film D 1 und Substrat A 3 die Primerschicht P 2 aufgebracht ist. Weiterhin ist der Film D 1 an einer zweiten Oberfläche mit einer Fläche des zweiten Substrates B 4 verbunden, wobei zwischen Film D 1 und Substrat B 5 eine weitere Primerschicht P 4 aufgebracht ist.

Die Substrate A 3 und B 5 sind elektrisch leitfähig, sodass an die beiden Substrate eine Spannung angelegt werden kann, wie in Fig. 3 schematisch gezeigt.

Durch das Anlegen der Spannung wird die Adhäsion der Klebemasseschicht D 1 an das Substrat A 3 stark herabgesetzt und es erfolgt ein Lösen dieser Schichten voneinander, wie an der schematischen Darstellung gemäß Fig. 4 erkennbar.

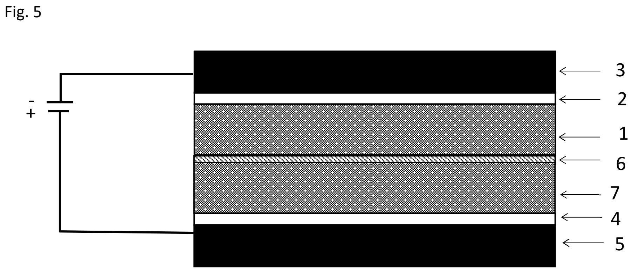

In Fig. 5 ist eine schematische Darstellung des erfindungsgemäßen verklebten Verbundes in einer bevorzugten Ausführungsform abgebildet. Wie anhand von Fig. 5 erkennbar, ist der Film D 1 an einer ersten Oberfläche mit einer Fläche des ersten Substrates A 3 verbunden, wobei zwischen Film D 1 und Substrat A 3 die Primerschicht P 2 aufgebracht ist. Weiterhin ist der Film D 1 an einer zweiten Oberfläche mit einer Fläche einer elektrisch leitfähigen Trägerschicht T' 6 verbunden. An die Trägerschicht T' 6 ist ein zweites elektrisch leitfähiges Substrat B 5 über einen zweiten hitzeaktivierbaren Film D' 7 gebunden Zwischen dem zweiten Film D' und dem zweiten Substrat B 5 ist eine zweite Primerschicht P' 4 vorhanden. Die Trägerschicht T' ist insbesondere eine Nickel-Eisen-Folie. Die Filme D 1 und D' 7 weisen insbesondere die gleiche Zusammensetzung auf. An die beiden Substrate A 3 und B 5 kann eine Spannung angelegt werden.

Alternativ könnte auch eine Spannung an eines der Substrate A oder B und die Trägerschicht T' 6 angelegt werden, insbesondere wenn diese seitlich etwas aus dem Verbund herausragt (in Fig. 5 nicht gezeigt).

Im Folgenden werden einige Beispiele beschrieben, um die Erfindung weiter zu verdeutlichen.

### Prüfmethoden

Alle Messungen werden, sofern nichts anderes angegeben ist, bei 23 °C und 50 % relativer Luftfeuchtigkeit durchgeführt. Die mechanischen und klebtechnischen Daten wurden wie folgt ermittelt:

### Dicke

Die Dicke einer Klebemasseschicht bzw. Films kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Bei nicht-haftklebrigen Filmen kann auf die Verwendung eines Liners verzichtet und somit direkt gemessen werden. Die Dicke der Klebemasseschicht lässt sich über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### Verklebungsfestigkeit - Push-Out

Der Push-out-Test ermöglicht Aussagen über die Verklebungsfestigkeit eines doppelseitig klebenden Klebeprodukts in einem verklebten Verbund in Richtung der Klebschichtnormalen.

Dazu wird ein quadratisches Substrat S1 mit den Außenmaßen 33 mm x 33 mm bereitgestellt. Auf einer der Oberflächen wird entlang der Kanten die jeweilige Primerlösung (oder kein Primer, V1 und V2) mit einer Breite von 5 mm aufgetragen, sodass ein 5mm breiter Rahmen mit Primer entlang der Außenkanten des quadratischen Substrates entsteht.

Zudem wird ein rahmenförmiger, quadratischer Stanzling des reaktiven hitzeaktivierbaren Klebefilms bereitgestellt -hergestellt durch Stanzen mittels eines Stanzeisens aus dem flächigen Klebefilm: Außenmaße 30 mm x 30 mm; Stegbreite 3,0 mm; Innenmaße (Fensterausschnitt) 27 mm x 27 mm. Die Gesamtfläche des zu untersuchenden rahmenförmigen Klebefilms beträgt 170 mm².

Zudem wird ein quadratisches, rahmenförmiges Substrat S2 bereitgestellt: Außenmaße 40 mm x 40 mm; Innenmaße (Fensterausschnitt) 20 mm x 20 mm.

Auf einer der Oberflächen wird entlang der Innenkanten des Rahmens die jeweilige Primerlösung (oder kein Primer, V1 und V2) mit einer Breite von 5 mm aufgetragen, sodass ein 5mm breiter Rahmen mit Primer entlang der Innenkanten des quadratischen, rahmenförmigen Substrates entsteht.

Die Substrate S1 und S2 sind aus SUS-Stahl und werden jeweils vor dem Primerauftrag mittels Methylethylketon (MEK) gereinigt.

Das Aufbringen des Primers erfolgt jeweils durch Drucken mittels eines Nordson-Druckers.

Im Anschluss wird das Lösungsmittel für mindestens zwei Minuten bis maximal 20 Minuten verdampfen gelassen. Die Schichtdicke der Primerschicht nach dem Trocknen beträgt 1,5 µm.

Eines der Substrate, beispielsweise S1, wird auf eine auf 60 °C vorgewärmte Heizplatte gelegt und für mindestens 30 Sekunden vorgewärmt.

Der bereitgestellte Film der reaktiven hitzeaktivierbaren Klebemasse wird, ggf. nach Entfernen eines Schutzliners, mittels einer Pinzette auf dem vorgewärmten und primerbehandelten Substrat angeordnet. Es wird mit einer Gummirolle angedrückt und kurz abkühlen gelassen. Das zweite Substrat, beispielsweise S2, wird ebenfalls auf eine auf 60 °C vorgewärmte Heizplatte gelegt und für mindestens 30 Sekunden vorgewärmt. Ggf. wird ein noch vorhandener Schutzliner von der vom ersten Substrat in z-Richtung wegweisenden Oberfläche des Films D entfernt. Das zweite Substrat wird im Anschluss auf der freien Oberfläche des Films D platziert und angedrückt. Anschließend wurde der wie beschrieben vor-laminierte Verbund abkühlen gelassen.

Der Film ist derart zwischen die Substrate S1 und S2 angeordnet, dass die Innenausschnitte des rahmenförmigen Films und des Substrates S2 zentriert übereinander liegen. Als Resultat steht der aufgetragene Primer auf den beiden Substraten in unterschiedlichen Richtungen - gegenüber dem Film - über, sodass sich im verklebten Verbund keine primerbehandelten Flächen ohne Film berühren.

In einer Laborheizpresse wurde im Fall der Beispiele E1, V2, V3, V4 bei 65 °C Stempeltemperatur und 5 bar für 600 s verpresst und so ein entsprechender hitzeaktivierter Verbund erzeugt. In einer Laborheizpresse wurde im Fall des Beispiels V1 bei 90 °C Stempeltemperatur und 5 bar für 300 s verpresst und so ein entsprechender hitzeaktivierter Verbund erzeugt. Die erhaltenen Probekörper werden für 24 Stunden bei RT und 50 % r.F. (Standardklima) gelagert.

Das Format des Rahmens (Substrat S2) überragt das Format von Substrat S1, so dass der Verbund mittels der überstehenden Bereiche des Rahmens (Substrat S2) auf einem Auflegetisch platziert werden kann.

Mittels eines Stempels der in eine Zugprüfmaschine eingespannt ist, wird durch konstante Vorwärtsbewegung des Stempels durch die Öffnung in Substrat S2 senkrecht auf Substrat S1 gedrückt und so eine Kraft auf die Klebefuge im Verbund ausgeübt. Die Prüfgeschwindigkeit des Stempels liegt bei 10 mm/s. Aufgenommen wird diejenige maximale Kraft, bei der Substrat S1 vom Rahmen (Substrat S2) abgelöst wird. Die Kraft wird auf die Stempelfläche bezogen, so dass Push-out-Festigkeiten in Einheiten von N/mm² bzw. MPa resultieren. Das Prüfklima ist 23 °C und 50 % relative Feuchtigkeit.

### Schockbeständigkeit - DropTower

Die Probenvorbereitung erfolgt wie für den Push-Out Test und mit den gleichen Geometrien.

Die erhaltenen Probekörper werden für 24 Stunden bei RT und 50 % r.F. (Standardklima) gelagert.

Unmittelbar nach der Lagerung wird der Probekörper derart in die Probenhalterung des instrumentierten Fallwerkes eingesetzt, dass der Verbund waagerecht, mit nach unten ausgerichtetem Stahlfenster vorliegt. Die Messung erfolgt instrumentell und automatisch unter Nutzung eines Belastungsgewichtes von 5 kg und einer Fallhöhe von 115 mm. Durch die eingebrachte kinetische Energie des Belastungsgewichtes wird die Verklebung durch Bruch des Klebebandes zwischen Fenster und Rahmen zerstört, wobei die Kraft von einem piezoelektrischen Sensor im µs-Takt aufgezeichnet wird. Die zugehörige Software gibt dementsprechend nach der Messung den Graph für den Kraft-Zeit-Verlauf an. Es wird der Kraft-Bereich unter der Kurve und daraus die Gesamtenergie ermittelt.

Es wurden von jeder Probe fünf Prüfkörper untersucht und als Endergebnis die Gesamtenergie aus dem Mittelwert der fünf Proben ermittelt.

Folgende Beispiele für erfindungsgemäße verklebte Verbunde (mit E gekennzeichnet) und Vergleichsbeispiele (mit V gekennzeichnet) wurden hergestellt:

**Tabelle 1: Eingesetzte Chemikalien:**

| **Verwendete Bezeichnung / Handelsname** | **Anbieter** | **Spezifizierung** |
|---|---|---|
| **Klebemasse** | | |
| Irostic^{®} S 9827-12 | Huntsman | hydroxy-terminiertes, weitgehend lineares, thermoplastisches, stark kristallisierendes Polyurethan-Elastomer; Polymer-komponente |
| Dancure^{®} 999 | Danquinsa GmbH | 2,4-dioxo-1,3-diazetidin-1,3-bis(4-methyl-m-phenylen)-diisocyanate; Vernetzer |
| MEK | Shell | Methylethylketon; CAS 78-93-3 |
| EMIM-FSI | proionic GmbH | Ionische Flüssigkeit; 1-Ethyl-3-methylimidazolium-bis(trifluormethylsulfonyl) imid; CAS 235789-75-0 |

| **Primerzusammensetzung** | | |
|---|---|---|
| Laricol 1460 | Coim | Thermoplastisches Polyurethan |
| Geniosil^{®} GF20 | Wacker | (3-Triethoxysilylpropyl)-Bernsteinsäureanhydrid (CAS-Nr. 93642-68-3) |
| Ethylacetat/MEK | | wasserfreies Gemisches aus 80 Gew.-% Ethylacetat und 20 Gew.-% Methylethylketon (MEK) |

Der Film D wurde für die Beispiele V1, V2, V3, V4 und E1 verwendet und folgendermaßen bereitgestellt:
87,0 Gew.-%, bezogen auf die spätere Gesamtmenge der Klebemasse ohne Lösungsmittel, Irostic^{®} S 9827-12 (Polyurethan) wurden in MEK gelöst. Anschließend wurden 10,0 Gew.-% Dancure^{®} 999 hinzugegeben und intensiv mit dem gelösten Polyurethan vermischt. Dann wurden 3,0 Gew. % der ionischen Flüssigkeit 1-Ethyl-3-methylimidazolium-bis(trifluormethylsulfonyl)imid (EMIM-FSI) zugegeben und ebenfalls intensiv vermischt.

Die reaktive hitzeaktivierbare Klebemasse wurde anschließend aus Lösung auf ein Glassinetrennpapier (Schutzliner) ausgestrichen und bei 50 °C für 20 Minuten getrocknet. Nach der Trocknung betrug die Schichtdicke 100 µm.

Variiert wurde die jeweilige Zusammensetzung des Primers und teilweise die Aktivierungstemperatur. Erfindungsgemäße Beispiele sind mit "E" gekennzeichnet und Vergleichsbeispiele mit "V".
E1: Der Primer bestand aus 4 g thermoplastischem Polyurethan (Laricol 1460, Fa. Coim), 1 g (3-Triethoxysilylpropyl)-Bernsteinsäureanhydrid (CAS-Nr. 93642-68-3, Geniosil^{®} GF20, FA. Wacker) und 95 g eines wasserfreien Gemisches aus 80 Gew.-% Ethylacetat und 20 Gew.-% Methylethylketon (MEK);
V1: Es wurde kein Primer verwendet;
V2: Es wurde kein Primer verwendet;
V3: Der Primer bestand aus 4 g eines Polyacrylates (hergestellt durch Polymerisation einer Monomerzusammensetzung enthaltend 70 Gew.-% Butylacrylat und 30 Gew.-% VinylCaprolactam, bezogen jeweils auf das Gesamtgewicht der enthaltenen Monomere in der Monomerzusammensetzung), 4 g Titantetraisopropanolat (TYZOR^{®} TPT, Lehmann & Voß, CAS 546-68-9) und 92 g Isopropanol;
V4: Als Primer wurde das kommerziell erhältliche Produkt Sika^{®} Primer-207 (Fa. Sika) verwendet.

Aus den Klebefilmen und verschiedenen Primerlösungen wurden Probekörper für die jeweiligen zu untersuchenden Eigenschaften hergestellt. Die Präparation inklusive der Aktivierung der reaktiven hitzeaktivierbaren Klebemasse des Films D ist in der Methodenbeschreibung zum Push-Out-Test aufgeführt.

Die Verklebungsfestigkeiten sowie Schockbeständigkeiten wurden gemäß der oben angegebenen Methoden bestimmt. Die Ergebnisse sind in Tabelle 2 zusammengefasst.

Anschließend wurden erneut Proben der oben genannten Beispiele hergestellt und anhand des Push-Out-Tests auf die elektrische Wiederablösbarkeit geprüft.

Nach der Verklebung und Aktivierung wurde hierzu jeweils eine Spannung an die beiden Stahlplatten als Vertreter für leitfähige Substrate A und B angelegt.

Die angelegte Spannung sowie die erhaltenen Ergebnisse sind ebenfalls in Tabelle 2 aufgeführt.

**Tabelle 2**

| | **Einheit** | **V1** | **V2** | **V3** | **V4** | **E1** |
|---|---|---|---|---|---|---|
| Aktivierungstemperatur | °C | 90 | 65 | 65 | 65 | 65 |
| Verklebungsfestigkeit vor Anlegen einer Spannung | MPa | 9,5 | 5,8 | 7,8 | 9,2 | 9,6 |
| Verklebungsfestigkeit nach Anlegen einer Spannung von 9 V | MPa | 0,2 | 0,2 | 3,1 | 9,1 | 0,3 |
| Verklebungsfestigkeit nach Anlegen einer Spannung von 30 V | MPa | 0,2 | 0,2 | 2,6 | 9,25 | 0,2 |
| Schockbeständigkeit | J | 0,6 | 0,1 | 0,4 | 0,7 | 1,2 |

Wie anhand der geringen Verklebungsfestigkeiten für E1 nach Anlegen einer Spannung in Tabelle 2 erkennbar, ist der erfindungsgemäß hergestellte Verbund, wobei als Primer eine Zusammensetzung bestehend aus (a) einem thermoplastischen Polyurethan und (b) einem Organosilan und - in diesem Fall zum Auftragen - einem Lösungsmittel verwendet wurde, überraschenderweise elektrisch ablösbar. Dies ist deshalb überraschend, da im verklebten Verbund A-P-D-P-B in den Primerschichten P kein Elektrolyt vorhanden ist, insbesondere keine ionische Flüssigkeit zugegeben wurde.

Dementsprechend sind die Verklebungsfestigkeiten nach Anlegen einer Spannung in den Beispielen V3 und V4, bei denen andere Primer zum Vergleich verwendet wurden, deutlich höher. Gleichzeitig werden bei E1 im Vergleich zu V2 bei gleicher Aktivierungstemperatur (65 °C) des reaktiven Klebefilms D höhere Verklebungsfestigkeiten vor dem Anlegen einer Spannung erzielt. Die Verklebungsfestigkeiten von E1 liegen auf einem ähnlichen Niveau wie bei V1 ohne Verwendung eines Primers aber mit deutlich höherer Aktivierungstemperatur (90 °C). Damit ist es überraschenderweise auch gelungen, die Aktivierungstemperatur zu senken, womit temperaturempfindliche Substrate, wie beispielsweise anodisiertes Aluminium, Polymere, Displays und/oder Glas, verklebt werden können.

Der Vergleich von V1 sowie der anderen Vergleichsbeispiele V2 bis V4 und E1 zeigt zudem, dass der erfindungsgemäß hergestellte Verbund eine höhere Schockbeständigkeit im DropTower Test zeigt.
- Die Vergleichsbeispiele liegen bei den gemessenen Größenordnungen auf einem deutlich geringeren Niveau. Die Unterschiede liegen dabei nicht lediglich innerhalb der Messtoleranzen.

### Bezugszeichenliste

- 1: Film D
- 2: Primerschicht P
- 3: elektrisch leitfähiges Substrat A
- 4: Primerschicht P'
- 5: elektrisch leitfähiges Substrat B
- 6: elektrisch leitfähige Trägerschicht T'
- 7: zweiter Film D'

## Patentansprüche

1. Klebeband-System umfassend
(i) einen Film D aus einer reaktiven hitzeaktivierbaren Klebemasse, wobei die reaktive hitzeaktivierbare Klebemasse wenigstens einen Elektrolyten enthält; und
(ii) eine Primerzusammensetzung, die zur Ausbildung einer separaten Schicht vorgesehen ist und wenigstens folgende Bestandteile enthält:
(a) wenigstens ein thermoplastisches Polyurethan; und
(b) wenigstens ein Organosilan.

2. Klebeband-System nach Anspruch 1, **dadurch gekennzeichnet, dass** das Organosilan (b) ausgewählt ist aus der Gruppe bestehend aus Trialkoxysilylalkyl-Bernsteinsäureanhydriden, Trialkoxyphenylsilanen, (3-Mercaptopropyl)trialkoxysilanen, (3-Aminopropyl)alkoxysilanen, 3-(2-Aminoethylamino)propyltrialkoxysilanen, Vinyltrialkoxysilanen, und (3-Glycidyloxypropyl)trialkoxysilanen.

3. Klebeband-System nach Anspruch 2, **dadurch gekennzeichnet, dass** der Alkylteil des Trialkoxysilylalkyl-Bernsteinsäureanhydrids eine lineare Alkylen-Gruppe mit 1 bis 10 Kohlenstoffatomen, bevorzugt 3 bis 8 Kohlenstoffatomen, ist, wobei eine Propylen-Gruppe besonders bevorzugt ist und/oder die Alkoxyl-Gruppen des Trialkoxysilylalkyl-Bernsteinsäureanhydrids ausgewählt sind aus Methoxy-Gruppe und Ethoxy-Gruppen.

4. Klebeband-System nach einem der Ansprüche 1 bis 3, **dadurch gekennzeichnet, dass** das Organosilan (b) der Primerzusammensetzung (3-Triethoxysilylpropyl)-Bernsteinsäureanhydrid ist.

5. Klebeband-System nach einem der vorherigen Ansprüche, **dadurch gekennzeichnet, dass** das thermoplastische Polyurethan (a) der Primerzusammensetzung keine freien Isocyanat-Gruppen aufweist.

6. Klebeband-System nach einem der vorherigen Ansprüche, **dadurch gekennzeichnet, dass** die reaktive hitzeaktivierbare Klebemasse mindestens ein thermoplastisches Elastomer enthält, wobei das thermoplastisches Elastomer bevorzugt funktionelle Gruppen umfasst, die mit Isocyanat reagieren können, und die reaktive hitzeaktivierbare Klebemasse als Vernetzer eine Isocyanat-haltige Verbindung enthält.

7. Klebeband-System nach Anspruch 6, **dadurch gekennzeichnet, dass** das thermoplastische Elastomer wenigstens ein thermoplastisches Polyurethan ist.

8. Klebeband-System nach einem der vorherigen Ansprüche, **dadurch gekennzeichnet, dass** die reaktive hitzeaktivierbare Klebemasse auf einem organischen Lösungsmittel basiert.

9. Klebeband-System nach einem der vorherigen Ansprüche, **dadurch gekennzeichnet, dass** der Elektrolyt ausgewählt ist aus der Gruppe bestehend aus ionischen Flüssigkeiten und Metallsalzen, wobei ionische Flüssigkeiten besonders bevorzugt sind.

10. Klebeband-System nach Anspruch 9, **dadurch gekennzeichnet, dass** das Anion der ionischen Flüssigkeit ausgewählt ist aus der Gruppe bestehend aus Br⁻, AlCl₄⁻, Al₂Cl₇⁻, NO₃⁻, BF₄⁻, PF₆⁻, CH₃COO⁻, CF₃COO⁻, CF₃CO₃⁻, CF₃SO₃⁻, (CF₃SO₂)₂N⁻, (CF₃SO₂)₃C⁻, AsF₆⁻, SbF₆⁻, CF₃(CF₂)₃SO₃⁻, (CF₃CF₂SO₂)₂N⁻, CF₃CF₂CF₂COO⁻, N(CN)₂⁻ und (FSO₂)₂N⁻,
und dabei besonders bevorzugt ausgewählt ist aus (CF₃SO₂)₂N und (FSO₂)₂N⁻, und/oder das Kation der ionischen Flüssigkeit ausgewählt ist aus der Gruppe bestehend aus Kationen auf Imidazolium- Basis, Kationen auf Pyridinium-Basis, Kationen auf Pyrrolidinium-Basis und Kationen auf Ammonium-Basis, und dabei besonders bevorzugt ausgewählt ist aus der Gruppe bestehend aus Kationen auf Imidazolium-Basis.

11. Verfahren zur Herstellung eines verklebten Verbundes unter Verwendung des Klebeband-Systems nach einem der Ansprüche 1 bis 10, **dadurch gekennzeichnet, dass** es wenigstens folgende Verfahrensschritte umfasst:
i. Bereitstellung eines elektrisch leitfähigen Substrats A oder einer elektrisch leitfähigen Trägerschicht T;
ii. Bereitstellung eines Films D aus einer reaktiven hitzeaktivierbaren Klebemasse, wobei die reaktive hitzeaktivierbare Klebemasse wenigstens einen Elektrolyten enthält;
iii. Bereitstellung einer Primerzusammensetzung, wobei die Primerzusammensetzung wenigstens folgende Bestandteile enthält:
(a) wenigstens ein thermoplastisches Polyurethan; und
(b) wenigstens ein Organosilan;
iv. Inkontaktbringung einer Oberfläche des ersten Substrats A oder einer Oberfläche der Trägerschicht T mit einer ersten Oberfläche des Films D;
v. wobei vor der Inkontaktbringung gemäß Schritt iv. zwischen dem Substrat A und der ersten Oberfläche des Films D oder der Trägerschicht T und der ersten Oberfläche des Films D die Primerzusammensetzung aus Schritt iii. als Schicht P aufgebracht wird;
x. Aktivierung des Films D durch Wärmezufuhr von 40 °C oder mehr und unter Anwendung eines Verpressdruckes von mehr als 1 bar.

12. Verfahren nach Anspruch 11, **dadurch gekennzeichnet, dass** es wenigstens folgende Verfahrensschritte umfasst:
i. Bereitstellung eines elektrisch leitfähigen Substrats A oder einer elektrisch leitfähigen Trägerschicht T;
ii. Bereitstellung eines Films D aus einer reaktiven hitzeaktivierbaren Klebemasse, wobei die reaktive hitzeaktivierbare Klebemasse wenigstens einen Elektrolyten enthält;
iii. Bereitstellung einer Primerzusammensetzung, wobei die Primerzusammensetzung wenigstens folgende Bestandteile enthält:
(a) wenigstens ein thermoplastisches Polyurethan; und
(b) wenigstens ein Organosilan;
iv. Inkontaktbringung einer Oberfläche des ersten Substrats A oder einer Oberfläche der Trägerschicht T mit einer ersten Oberfläche des Films D;
v. wobei vor der Inkontaktbringung gemäß Schritt iv. zwischen dem Substrat A und der ersten Oberfläche des Films D oder der Trägerschicht T und der ersten Oberfläche des Films D die Primerzusammensetzung aus Schritt iii. als Schicht P aufgebracht wird;
vi. Bereitstellung eines elektrisch leitfähigen Substrates B oder einer elektrisch leitfähigen Trägerschicht T';
vii. Inkontaktbringung einer Oberfläche des Substrats B oder einer Oberfläche der Trägerschicht T' mit einer zweiten Oberfläche des Films D;
viii. wobei optional vor der Inkontaktbringung gemäß Schritt vii. zwischen dem Substrat B und der zweiten Oberfläche des Films D oder der Trägerschicht T' und der zweiten Oberfläche des Films D die Primerzusammensetzung aus Schritt iii. als Schicht P' aufgebracht wird;
x. Aktivierung des Films D durch Wärmezufuhr von 40 °C oder mehr und unter Anwendung eines Verpressdruckes von mehr als 1 bar.

13. Verklebter Verbund hergestellt durch das Verfahren nach Anspruch 12.

14. Verfahren zum elektrischen Lösen des Verbundes nach Anspruch 13, umfassend wenigstens folgende Verfahrensschritte:
i.) Anlegen einer Spannung an zwei verschiedenen elektrisch leitfähigen Stellen des Verbundes, wobei die Spannung bevorzugt von 1 bis 50 V, besonders bevorzugt 2 bis 50 V, beträgt, wobei die Spannung entweder an das elektrisch leitfähige Substrat A und das elektrisch leitfähige Substrat B oder an das elektrisch leitfähige Substrat A und die elektrisch leitfähige Trägerschicht T' oder an die elektrisch leitfähige Trägerschicht T und das elektrisch leitfähige Substrat B oder an die elektrisch leitfähige Trägerschicht T und die elektrisch leitfähige Trägerschicht T' angelegt wird.

15. Verwendung des Klebeband-Systems nach einem der Ansprüche 1 bis 10 oder des verklebten Verbundes nach Anspruch 13 in elektronischen Geräten, Automobilen, medizinischen Geräten und zahnmedizinischen Geräten sowie im handwerklichen Bereich und im Haushalt.
